(19) **Europäisches Patentamt / European Patent Office / Office européen des brevets**

(11) **EP 4 243 548 B1**

(12) # EUROPEAN PATENT SPECIFICATION

(45) Date of publication and mention
of the grant of the patent:
**25.06.2025  Bulletin 2025/26**

(21) Application number: **20961190.4**

(22) Date of filing: **13.11.2020**

(51) International Patent Classification (IPC):
**H04W 74/0833** *(2024.01)*    **H04L 1/08** *(2006.01)*

(52) Cooperative Patent Classification (CPC):
**H04W 74/0833; H04L 1/08;** H04W 74/0836;
H04W 74/0838

(86) International application number:
**PCT/CN2020/128764**

(87) International publication number:
**WO 2022/099634 (19.05.2022 Gazette 2022/20)**

(54) **WIRELESS COMMUNICATION METHOD, TERMINAL DEVICE, AND NETWORK DEVICE**

DRAHTLOSKOMMUNIKATIONSVERFAHREN, ENDGERÄTEVORRICHTUNG UND
NETZWERKVORRICHTUNG

PROCÉDÉ DE COMMUNICATION SANS FIL, DISPOSITIF TERMINAL, ET DISPOSITIF DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.09.2023  Bulletin 2023/37**

(73) Proprietor: **GUANGDONG OPPO MOBILE
TELECOMMUNICATIONS
CORP., LTD.**
**Dongguan, Guangdong 523860 (CN)**

(72) Inventor: **HE, Chuanfeng**
**Dongguan, Guangdong 523860 (CN)**

(74) Representative: **Ipside**
**7-9 Allée Haussmann
33300 Bordeaux Cedex (FR)**

(56) References cited:
WO-A1-2020/194758     CN-A- 107 113 875
CN-A- 110 574 479     CN-A- 111 615 210
CN-A- 111 786 756     US-A1- 2020 252 967
US-A1- 2020 296 765     US-A1- 2022 174 749

- **VIVO: "Remaining Issues on MsgA Transmission
and Fallback", vol. RAN WG2, no. Reno, USA;
20191118 - 20191122, 8 November 2019
(2019-11-08), XP051816460, Retrieved from the
Internet <URL:https://ftp.3gpp.org/tsg_ran/
WG2_RL2/TSGR2_108/Docs/R2-1914376.zip
R2-1914376 Remaining Issues on MsgA
Transmission and Fallback.docx> [retrieved on
20191108]**

## Description

### TECHNICAL FIELD

The present disclosure relates to the field of communication, and in particular, to a wireless communication method, a terminal device and a network device.

### BACKGROUND

The random access based on contention currently includes: four-step random access and two-step random access. The two-step random access includes a terminal device sending a message (Msg) A to a network device. The Msg A includes preambles transmitted on physical random access channel (PRACH) and load information transmitted on physical uplink shared channel (PUSCH).

In a New Radio (NR) system, it is desired to introduce certain technologies to support other service types besides Enhanced Mobile Broadband (eMB). The terminal device supporting this kind of service has the characteristics of low complexity, low cost and low capability, and is called a reduced capability (RedCap) terminal. The RedCap terminal has the characteristics of the low complexity, the low cost and the low capability, so it is necessary to consider enhancing the uplink coverage of this kind of terminal, such as introducing the retransmission of the Msg A. However, how to determine number of retransmission of PRACH and PUSCH in the Msg A is a technical problem to be solved urgently in the present disclosure.

For example, WO2020194758A1 discloses a user equipment, including a transmitting unit configured totransmit first data in a first step of a 2-step RACH; and a receiving unit configured to receive second data in a secondstep of the 2-step RACH. The user equipment performs fallback to a 4-step RACH at the time of retransmission of the first data. In addition,provided is a user equipmentincluding:a transmitting unit configured to transmit firstdata in a first step of a 2-step RACH; and a receiving unitconfigured to receive second data in a second step of the2-step RACH. The user equipment performs fallback to a 4-step RACH according to the received second data.

### SUMMARY

In a first aspect, a wireless communication method is provided, and the wireless communication method is as set out claims 1-7.

In a second aspect, a wireless communication method is provided, and the wireless communication method is as set out claims 8-11.

In a third aspect, a terminal device is provided, including a processor and a memory. The memory is configured to store a computer program, and the processor is configured to call and run the computer program stored in the memory, and is configured to execute the method of the above first aspect.

In a fourth aspect, a network device is provided, including a processor and a memory. The memory is configured to store a computer program, and the processor is configured to call and run the computer program stored in the memory, and is configured to execute the method of the above second aspect.

Through the above technical solutions, for the Msg A of the two-step random access, the terminal device can independently determine the number of retransmission of the PRACH and the number of retransmission of the PUSCH. Particularly for RedCap terminals, because there may be coverage differences between the PRACH and the PUSCH, the technical solution of the present disclosure can flexibly carry out the retransmission of the PRACH and retransmission of the PUSCH, without the need for the same number of retransmission of PRACH and PUSCH, resulting in the binding of the retransmission between the PRACH and the PUSCH.

### BRIEF DESCRIPTION OF THE DRAWINGS

FIG. 1 is an architecture diagram of a communication system provided by some embodiments of the present disclosure.
FIG. 2 is an interactive flow chart of a contention-based four-step random access process.
FIG. 3 is an interactive flow chart of a contention-based two-step random access process.
FIG. 4 is a position diagram of a PRACH frequency domain provided by some embodiments of the present disclosure.
FIG. 5 is a schematic diagram of a mapping relationship between a SSB and a PRACH occasion provided by some embodiments of the present disclosure.
FIG. 6 is a schematic diagram of a relative relationship between a PO and an associated RO in a time-frequency position provided by some embodiments of the present disclosure.

FIG. 7 is a distribution diagram of POs provided by some embodiments of the present disclosure.

FIG. 8 is a schematic diagram of a mapping relationship between a preamble and a PO provided by some embodiments of the present disclosure.

FIG. 9 is an interactive flow chart of a wireless communication method provided by some embodiments of the present disclosure.

FIG. 10 is a schematic diagram of a Msg A retransmission provided by some embodiments of the present disclosure.

FIG. 11 is an interactive flow chart of another wireless communication method provided by some embodiments of the present disclosure.

FIG. 12 is an interactive flow chart of another wireless communication method provided by some embodiments of the present disclosure.

FIG. 13 shows a schematic block diagram of a terminal device 1300 according to some embodiments of the present disclosure.

FIG. 14 shows a schematic block diagram of a terminal device 1400 according to some embodiments of the present disclosure.

FIG. 15 shows a schematic block diagram of a terminal device 1500 according to some embodiments of the present disclosure.

FIG. 16 shows a schematic block diagram of a network device 1600 according to some embodiments of the present disclosure.

FIG. 17 shows a schematic block diagram of a network device 1700 according to some embodiments of the present disclosure.

FIG. 18 shows a schematic block diagram of a network device 1800 according to some embodiments of the present disclosure.

FIG. 19 is a schematic structure diagram of a communication device 1900 provided by some embodiments of the present disclosure.

FIG. 20 is a schematic structure diagram of an apparatus provided by some embodiments of the present disclosure.

FIG. 21 is a schematic block diagram of a communication system 2100 provided by some embodiments of the present disclosure.

## DETAILED DESCRIPTION OF THE PREFERRED EMBODIMENTS

The technical solution of the embodiments of the present disclosure may be applied to various communication systems, such as a global system of mobile communication (GSM) system, a code division multiple Access (CDMA) system, a broadband code division multiple access (WCDMA) system, a general packet radio service (GPRS), a long term evolution (LTE) system, an advanced long term evolution (LTE-A) system, a NR system, an evolution system of NR system, such as a NR-light system, a LTE-based access to unlicensed spectrum (LTE-U) system, a NR-based access to unlicensed spectrum (NR-U) system, a NTN system, a universal mobile communication system (UMTS), a wireless local area networks (WLAN), a wireless fidelity (WiFi), a 5th-Generation (5G) system or other communication systems.

Generally speaking, the number of connections supported by traditional communication systems is limited and easy to realize. However, with the development of communication technologies, mobile communication systems will not only support traditional communication, but also support, for example, device-to-device (D2D) communication, machine-to-machine (M2M) communication, machine type communication (MTC), and vehicle to vehicle (V2V) communication, Internet of Vehicles V2X communication, or the like. Embodiments of the present disclosure can also be applied to these communication systems.

Alternatively, the embodiments of the present disclosure may be applied to the above terrestrial networks (TN) system, and also to a non-terrestrial networks (NTN) system.

Alternatively, the communication system in the embodiments of the present disclosure may be applied to a carrier aggregation (CA) scene, a dual connectivity (DC) scene, and a standalone (SA) deployment scene.

Alternatively, the embodiments of the present disclosure may be applied to both unlicensed spectrum and licensed spectrum. The unlicensed spectrum can also be considered as shared spectrum, and the licensed spectrum can also be considered as unshared spectrum.

The embodiments of the present disclosure describe various embodiments in cooperation with a network device and a terminal device. The terminal device can also be referred to as a user equipment (UE), an access terminal, a user unit, a user station, a mobile station, a mobile apparatus, a remote station, a remote terminal, a mobile device, a user terminal, a terminal, a wireless communication device, a user agent, a user device, or the like. The terminal device may be a station (ST) in WLAN, a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, an on-board device, a wearable device and next-generation communication systems, such as a terminal device in a NR network, a terminal device in a public land mobile network (PLMN) that will evolve in the future, or the like.

In the embodiments of the present disclosure, the terminal device may be deployed on the land, including indoor or outdoor, handheld, wearable or vehicular, can also be deployed on the water (such as ships, etc.), and can also be deployed in the air (such as airplanes, balloons, satellites, etc.).

In the embodiments of the present disclosure, the terminal device may be a mobile phone, a pad, a computer with wireless transceiver functions, a virtual reality (VR) terminal device, an augmented reality (AR) terminal device, a wireless terminal in industrial control, a vehicle-mounted terminal device, and a wireless terminal in self-driving, a wireless terminal device in remote medical, a wireless terminal device in smart grid, a wireless terminal device in transportation safety, a wireless terminal device in smart city, a wireless terminal device in smart home, a wearable terminal device, or the like. The terminal device involved in the embodiments of the present disclosure can also be referred to as a terminal, a user equipment (UE), an access terminal device, a vehicle terminal, an industrial control terminal, a UE unit, a UE station, a mobile station, mobile apparatus, a remote station, a remote terminal device, a mobile device, a UE terminal, a wireless communication device, a UE agent, a UE device, or the like. The terminal device can also be fixed or mobile.

In the embodiments of the present disclosure, the terminal device, as an example rather than a limitation, can also be a wearable device. The wearable device can also be called a wearable smart device, and is an umbrella term for wearable devices, such as glasses, gloves, watches, clothing and shoes, for intelligently designing and developing wearable devices for daily wear using wearable technology. The wearable device is a portable device which is directly worn on the body or integrated into the user's clothing or accessories. The wearable device is not only a hardware device, but also powerful functions through software support, data interaction and cloud interaction. Broadly speaking, the wearable smart device includes complete or partial functions which are fully functional, large in size, and may be realized without relying on smart phones, such as smart watches, smart glasses or the like, and functions, such as smart bracelets and jewelry, which only focus on a certain type of application, and need to be used in conjunction with other devices, such as various smart bracelets and smart jewelry for physical monitoring.

The network device may be a device for communicating with the mobile device. The network device may be an access point (AP) in WLAN, a base station in GSM or CDMA, such as a base transceiver station (BTS), a base station in WCDMA, such as NodeB (NB), an evolutionary base station, such as evolutionary Node B (eNB or eNodeB) in LTE, a relay station or an access point, or an on-board equipment, a wearable device, a network device in NR network, such as gNB, a network device in future PLMN network.

The network device may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Alternatively, the network device can also be a base station set at land, water, and other positions.

In the embodiments of the present disclosure, the network device can service for a cell. The terminal device communicates with the network device through transmission resources (for example frequency domain resources, or spectrum resources) used by the cell. The cell may be a cell corresponding to the network device (such as the base station). The cell may belong to a macro base station or a base station corresponding to a small cell. The small cell herein can include a metro cell, a micro cell, a pico cell, a femto cell, or the like. The small cells have the characteristics of small coverage and low transmission power, and are suitable for providing high-speed data transmission services.

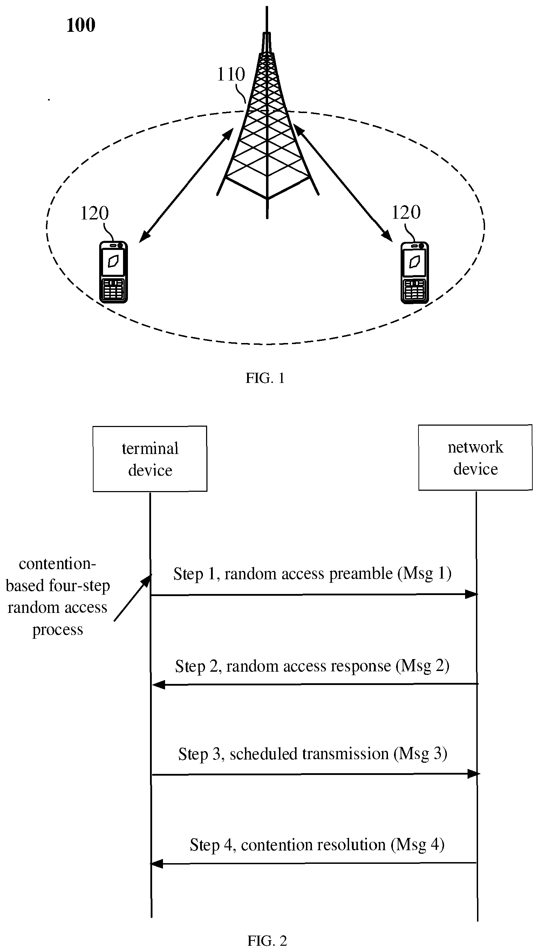

For example, a communication system 100 applied in the embodiments of the present disclosure is shown in FIG. 1. The communication system 100 may include a network device 110, and the network device 110 may be a device communicating with a terminal device 120 (or referred to as a communication terminal, a terminal). The network device 110 can provide communication coverage for a specific geographical area, and can communicate with the terminal device located in the coverage area.

FIG. 1 exemplarily shows one network device and two terminal devices. Alternatively, the communication system 100 can include a plurality of network devices and other number of terminal devices may be set within the coverage range of each network device, which are not limited in the embodiments of the present disclosure.

Alternatively, the communication system 100 may also include a network controller, a mobile management entity and other network entities, which are not limited in the embodiments of the present disclosure.

It should be understood that a device with communication functions in the network/ system in the embodiments of the present disclosure may be referred to as a communication device. Taking the communication system 100 shown in FIG. 1 as an example, the communication device can include the network device 110 and the terminal device 120 with communication functions, and the network device 110 and terminal device 120 may be the specific devices described above, which will not be repeated here. The communication device may also include other devices in the communication system 100, such as a network controller, a mobile management entity or other network entities, which are not limited in the embodiments of the present disclosure.

It should be understood that the terms "system" and "network" are often used interchangeably herein. The term "and/ or" herein describes the association relationship of the associated objects, indicating that there may be three relationships. For example, A and/ or B can indicate the presence of A alone, both A and B at the same time and B alone. The symbol "/" herein generally indicates that the front and rear associated objects are an "or" relationship.

In the description of the embodiments of the present disclosure, the term "corresponding" can mean that there is a direct or indirect corresponding relationship between the two, or there is an association relationship between the two, or there may be an indicating and being indicated relationship, a configuring and being configured relationship, or the like between the two.

In order to clearly explain the idea of the embodiments of the present disclosure, firstly the related technical content of the embodiments of the present disclosure is briefly described. The embodiments of the present disclosure include at least some of the following contents.

1. Random Access Process is mainly triggered by the following events:

(1) Initial access: the terminal device transitions from a radio resource control (RRC) idle state (RRC_IDLE) to a RRC connected state (RRC_CONNECTED).
(2) RRC connection re-establishment.
(3) Handover, that is the terminal device needs to establish uplink synchronization with a new cell.
(4) In RRC_CONNECTED, downlink (DL) data arrives, and uplink (UL) is in an out-of-step state.
(5) In RRC_CONNECTED, UL data arrives, and under this circumstance, the UL is in the out-of-step state.
(6) In RRC_CONNECTED, UL data arrives, and no physical uplink control channel (PUCCH) resources are available for transmitting scheduling request (SR). Under this circumstance, the terminal device which has been in an uplink synchronization state may be allowed to use random access channel (RACH) to replace the SR.
(7) A synchronous reconfiguration request from RRC.
(8) The terminal transits from a RRC inactive state (RRC_INACTIVE) to a RRC active state (RRC_ACTIVE).
(9) Time calibration is established during addition of a secondary cell (SCell).
(10) The terminal device requests other system information (OSI).
(11) Beam failure recovery of terminal device.

2. Random Access Process:

In NR Release (Rel)-15, following two random access modes are mainly supported: a contention-based random access mode and a non-contention-based random access mode. The following will focus on a contention-based four-step access process and a contention-based two-step random access process. Unless otherwise specified, the following four-step random access refers to the contention-based four-step random access, also known as type-1 random access, and two-step random access refers to contention-based two-step random access, also known as type 3 random access, which will not be repeated in the present disclosure.

FIG. 2 is an interactive flow chart of a contention-based four-step random access process.

As shown in FIG. 2, the random access process can include the following four steps.

Step 1: Msg 1.

The terminal device sends the Msg 1 to the network device to tell the network device that the terminal device has initiated a random access request. The Msg 1 carries a random access preamble (RAP), also known as random access preamble sequence, preamble sequence, preamble code, or the like. At the same time, the Msg 1 can also be used by the network device to estimate transmission delay between the network device and the terminal device and calibrate uplink time accordingly.

Specifically, the terminal device selects a prepare index and PRACH resources for sending the preamble. Then the terminal device transmits the preamble on PRACH. The network device will notify all terminal devices through a system information block (SIB) of a broadcast system, which time-frequency resources are allowed to transmit the preamble, for example, the SIB1.

Step 2: Msg 2.

After receiving the Msg 1 sent by the terminal device, the network device sends the Msg 2 to the terminal device, that is, a random access response (RAR) message. For example, the Msg 2 can carry time advance (TA), uplink authorization instructions, such as an uplink resource configuration, temporary cell radio network temporary identity (TC-RNTI) and the like.

The terminal device monitors physical downlink control channel (PDCCH) in a random access response window (RAR window) to receive a RAR message replied by the network device. The RAR message may be descrambled by using a corresponding random access radio network temporary identifier (RA-RNTI).

The random access process is considered to be failed in response to the terminal device not receiving the RAR message replied by the network device in the RAR window.

The RAR is considered to be successfully received in response to the terminal device successfully receiving the RAR message and the preamble index carried in the RAR message being same as the preamble index sent by the terminal device through the Msg 1, and the terminal device can stop listening in the RAR window.

The Msg 2 can include RAR messages for a plurality of terminal devices, and a RAR message of each of the plurality of terminal devices can include a random access preamble identification (RAPID) adopted by the terminal device, information configured to transmit resources of a Msg 3, TA adjustment information, TC-RNTI, and the like.

Step 3: Msg 3.

After receiving the RAR message, the terminal device determines whether the RAR message belongs to itself. For example, the terminal device can check by using preamble identification. After determining the RAR message belongs to itself, the terminal device generates the Msg 3 at a RRC layer and sends the Msg 3 to the network device, which should carry the identification information of the terminal device.

Specifically, for different random access trigger events, the Msg 3 in Step 3 of the four-step random access process can include different contents for scheduled transmission.

For example, for a scene of the initial access, the Msg 3 can include a RRC connection request generated by the RRC layer, ant the RRC connection request carries at least non-access stratum (NAS) identification information of the terminal device, and can also carry, for example, serving-temporary mobile subscriber identity (S-TMSI) or a random number of the terminal device.

For another example, for a scene of the connection re-establishment, the Msg 3 can include a RRC connection re-establishment request generated by the RRC layer without any NAS message, and can also carry, for example, a cell radio network temporary identifier (C-RNTI) and protocol control information (PCI).

For example, for a scene of the handover, the Msg 3 can include the RRC handover confirm generated by the RRC layer and the C-RNTI of the terminal device, and can also carry, for example, a buffer status report (BSR). For other triggering events, such as scenes of the uplink/ downlink data arriving, the Msg 3 should at least include the C-RNTI of the terminal device.

Step 4: Msg 4.

The network device sends the Msg 4 to the terminal device, and the terminal device correctly receives the Msg 4 to complete contention resolution. For example, during a RRC connection establishment process, the Msg 4 can carry a RRC connection establishment message.

The terminal device in the Step 3 will carry its own unique identification in the Msg 3, such as the C-RNTI or identification information from a core network (such as S-TMSI or a random number), and thereby in the contention resolution mechanism, the network device will carry the unique identification of the terminal device in the Msg 4 to specify a winning terminal device in contention. Other terminal devices that have not won in the contention resolution will restart random access.

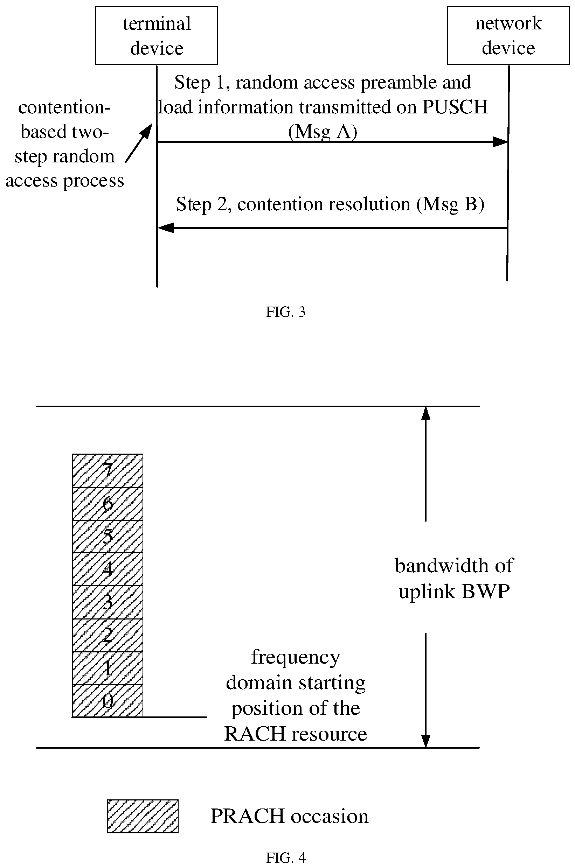

NR Rel-16 introduces a two-step random access process, which can reduce delay and reduce signaling overhead. FIG. 3 is an interactive flow chart of a contention-based two-step random access process. As shown in FIG. 3, the random access process can include the following two steps.

Step 1: Msg A.

The Msg A includes a preamble transmitted on PRACH and load information transmitted on physical uplink shared channel (PUSCH).

Step 2, Msg B.

After the Msg A is transmitted, the terminal device listens for response of the network in a configured RAR window. The terminal device ends the random access process in response to receiving indication of successful contention resolution issued by the network.

3. Random Access Resources, that is RACH Resources or PRACH Resources:

In the Rel-15, the RACH resources configured for access the terminal device are defined, including 256 configurations. RACH resource configurations may be indicated to an accessed terminal device through system messages. Each of the RACH resource configurations includes a preamble format, a period, a wireless frame offset, a subframe number in wireless frame, a starting symbol in subframe, the number of PRACH time slots in the subframe, the number of PRACH occasions and duration of PRACH occasion in PRACH time slot. As shown in Table 1, PRACH configuration index=86, indicating the wireless frame, the subframe, the starting symbol, time length, and the like of PRACH occasion.

Table 1

| PRACH configuration index | preamble format | $n_{SFN}$ mod x = y | | subframe | starting symbol | the number of PRACH time slots in one subframe | $\overline{N_t^{RA,slot}}$ number of PRACH occasion in one subframe | $N_{dur}^{RA}$, duration of PRACH occasion |
|---|---|---|---|---|---|---|---|---|
| | | x | y | | | | | |
| 86 | A1 | 1 | 0 | 0, 1, 2, 3, 4, 5, 6, 7, 8, 9 | 7 | 1 | 3 | 2 |

A frequency domain resource position of the RACH resource may be indicated by parameters such as msg1-FrequencyStart and msg1-FDM in high-level signaling RACH-ConfigGeneric. The msg1-FrequencyStart is configured to determine an offset of a starting position of a resource block (RB) of PRACH occasion 0 from a frequency domain starting position of uplink common bandwidth part (BWP) BWP 0, that is, to determine a frequency domain starting position of the RACH resource. Value of the msg1-FDM is {1, 2, 4, 8}, which is configured to determine the number of PRACH occasions in the frequency domain, and the number of RBs occupied by PRACH on traffic channel is determined by prach-RootSequenceIndex indicating the preamble sequence, and cooperating with $\Delta$ fRA to jointly determine the number of RBs occupied by the PUSCH. For example, FIG. 4 is a position diagram of a PRACH frequency domain provided by some embodiments of the present disclosure, and msg1-FDM=8.

4. Association Relationship Between Synchronization Signal Block (SSB) and RACH resource:

For the terminal device, on the basis of the RACH resource configuration indicated by the system message, the association relationship between the SSB and the RACH resource is also indicated, so that the terminal device can determine the RACH resource which may be used based on the detected SSB and the association relationship. Each SSB is associated with one or more PRACH occasions, as well as a plurality of contention-based preambles. That is, each SSB index is associated with a specific part of the RACH resource configuration indicated in the system message.

An upper layer configures N numbers of SSBs to associate one PRACH occasion and the number of the contention-based preambles for each SSB on each effective PRACH occasion (CB-PreamlesPerSSB) through the parameter ssb-perRACH-OccasionAndCB-PreamlesPerSSB.

When N<1, one SSB is mapped to 1/N number of consecutive effective PRACH occasions. For example, when N=1/4, one SSB is mapped to 4 PRACH occasions, preambles of R number of consecutive indexes are mapped to SSB n, $0 \leq n \leq M-1$, each of the effective PRACH occasions starts from the preamble index 0, and M represents the number of SSBs.

When N≥1, the preambles of R number of consecutive indexes are mapped to SSB n, $0 \leq n \leq M-1$, M represents the number of SSBs, and each of the effective PRACH occasions starts from the preamble index $n \cdot N_{preamble}^{total} / N$ . For example, N=2, and $N_{preamble}^{total} = 64$, then two SSBs are mapped to one PRACH occasion, and for these two SSBs n, n=0, 1, when n=0, the preamble indexes of SSB 0 start from 0; and when n=1, the preamble indexes in SSB 1 start from 32. The preamble indexes of SSB 0 are 0 to 31, and the preamble indexes of SSB 1 are 32 to the number of configured contention-based preambles minus 1. One effective PRACH occasion corresponds to the entire contention-based preambles, and under this circumstance, one effective PRACH occasion covers two SSBs, so the two SSBs each occupy part of the preambles, $N_{preamble}^{total}$ is configured by totalNumberOfRA-Preamles and is an integer multiple of N.

Relevant signaling examples are as follows:

ssb-perRACH-OccasionAndCB-PreamblesPerSSB CHOICE{
oneFourth ENUMERATED
{n4,n8,n12,n16,n20,n24,n28,n32,n36,n40,n44,n48,n52,n56,n60,n64},

The signaling indicates that one SSB is associated with four PRACH occasions, and n4 indicates that one SSB is associated with four contention-based preambles, and so on. The total number of contention-based preambles in one PRACH occasion is CB-preables-per-SSB * max (1, SSB-per-rach-occupation).

Mapping of SSB to PRACH occasion should follow the following order:

First, order of the preamble indexes is increasing in one PRACH occasion.
Second, frequency resource index order of frequency reuse PRACH occasions is increasing.
Third, time domain resource index order of time domain multiplexing PRACH occasions in PRACH time slot is increasing.
Fourth, order of PRACH slot indexes is increasing.

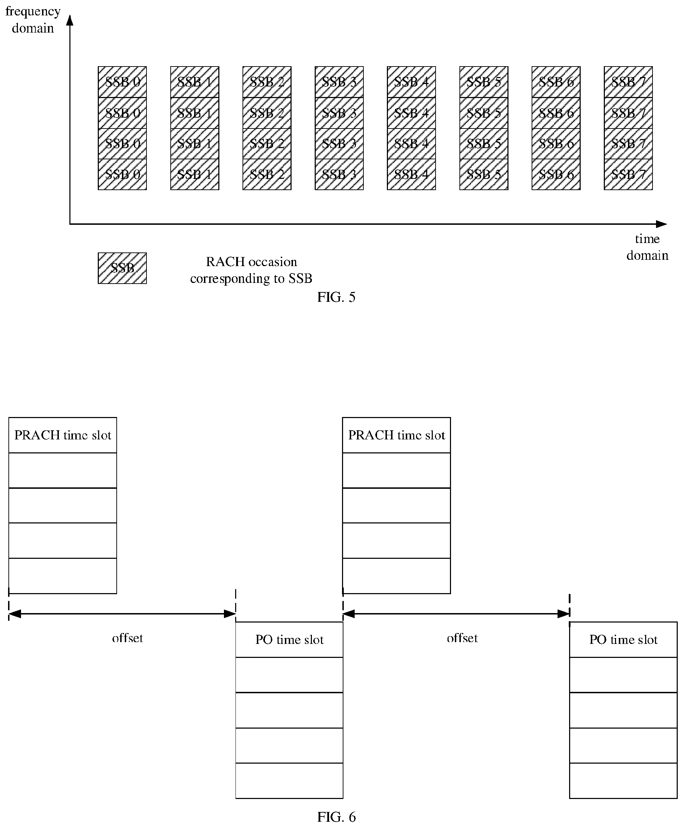

The following is an example to illustrate a mapping relationship between the two. For example, the number of SSBs is 8 (index: 0-7), and msg1-FDM=4 (indicating the number of PRACH occasions in the frequency domain). The ssb-perRACH-occation=1/4, and the mapping relationship between the SSB and PRACH occasion (i.e. RACH timing) is shown in FIG. 5.

5. Relationship Between PUSCH Occasion (PO) And RACH Occasion (RO):

In the contention-based two-step random access process and the non-contention-based two-step random access process, the terminal device needs to send the preamble and PUSCH. The RO where the preamble is located is the same as that in the four-step random access process, and through network configuration, the RO may be shared with the RO in the four-step random access process, or may be configured separately. The time-frequency resource where PUSCH is located is called PO. One PO can include a plurality of PUSCH Resource Units (PRUs), one PRU can include PUSCH resources and a Demodulation Reference Signal (DMRS), and the DMRS can include a DMRS port and a DMRS sequence. The PO is further configured through the network, and a period of the PO is the same as a period of RO, and is related. As shown in FIG. 6, a relative relationship between the PO and the associated RO in time and frequency is network configured.

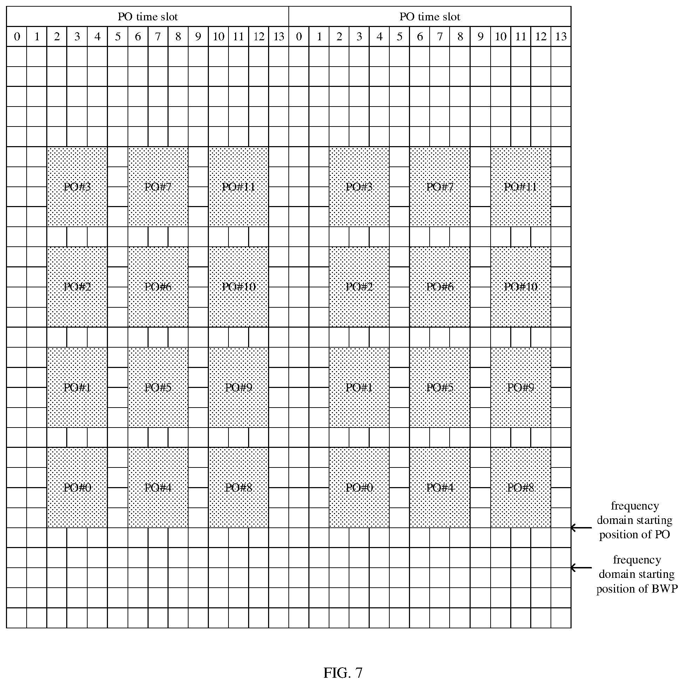

For example, as shown in FIG. 7, configuration parameters of one PO include the followings:

1. Modulation and Coding Scheme (MCS)/Transport Block Size (TBS).

2. A frequency domain starting point of the PO in activated BWP. As shown in FIG. 7, the frequency domain starting point of PO in the activated BWP is 2 RBs.

3. The number of RBs of PUSCH. As shown in FIG. 7, the number of RBs of PUSCH is 4 RBs.

4. Guard period between POs. As shown in FIG. 7, the guard period between POs is 1 symbol.

5. Starting symbol of first PO in time slot and the number of symbols included in each PO. As shown in FIG. 7, the starting symbol of the first PO in the time slot is 2, and the number of symbols included in each PO is 3.

6. Guard band between POs. As shown in FIG. 7, the guard band between POs is 1 RB.

7. The number of POs of frequency division. As shown in FIG. 7, the number of POs of frequency division is 4.

8. The number of PUSCH time slots. As shown in FIG. 7, the number of the PUSCH time slots is 2.

9. The number of POs in each PUSCH time slot. As shown in FIG. 7, the number of POs in each PUSCH time slot is 3.

A mapping relationship between the preamble in one PRACH time slot and the PRU in one PO time slot is defined. The mapping relationship may be one-to-one or many-to-one. The order of mapping is as follows.
In PRACH time slot, the order of a group of consecutive preambles is the followings:

First, the order of the preamble indexes is increasing in one PRACH occasion.
Second, the frequency resource index order of the frequency reuse PRACH occasions is increasing.
Third, the time domain resource index order of the time domain multiplexing PRACH occasions in PRACH time slot is increasing.
Fourth, the order of PRACH slot indexes is increasing.

Each M numbers of (M ≥ 1) consecutive PRACH preambles are mapped to effective PRUs in the following order.
First, frequency resource index order of frequency reuse PO is increasing.
Second, DMRS resource index order in the PO is increasing, and the DMRS resource index is sorted according to the ascending order of the DMRS port index first, and then is sorted according to the ascending order of the DMRS sequence index.

Third, time domain resource index order of time division PO is increasing in PUSCH time slot.

Fourth, the order of PRACH slot indexes is increasing.

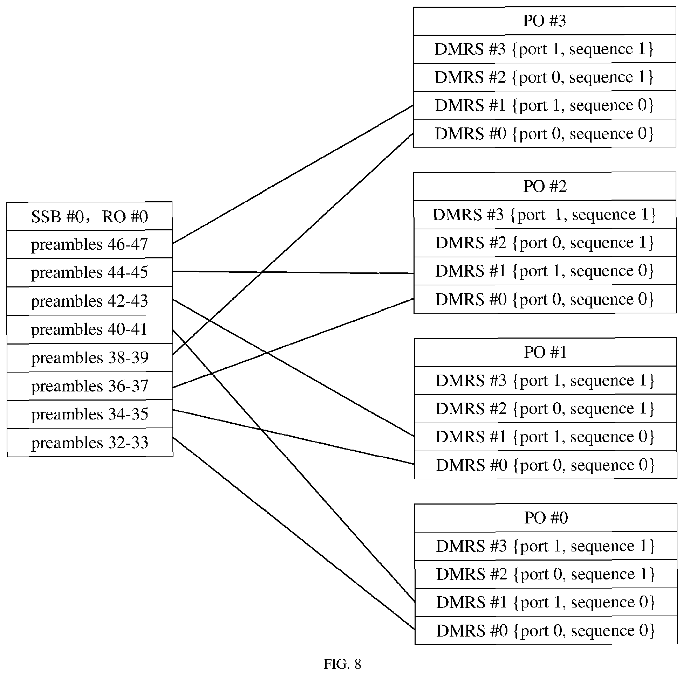

For example, FIG. 8 is a schematic diagram of a mapping relationship between a preamble and a PO provided by some embodiments of the present disclosure.

6. RedCap Terminal

The NR system is mainly designed to support eMBB service, the main technology is to meet the needs of high speed, high frequency spectral efficiency and large bandwidth. In fact, in addition to the eMB, there are many different service types, such as sensor networks, video surveillance, wearable services, and the like, which have different requirements with the eMB service in terms of speed, bandwidth, power consumption, cost, and the like. Capabilities of terminals supporting these services are lower than capabilities of terminals supporting the eMBB, such as the reduction of supported bandwidth, the relaxation of processing time, and the reduction of the number of antennas. The NR system needs to be optimized for these services and corresponding low-capability terminals. Such a system is called the NR-light system. In a LTE technology, similar systems have been designed to support large number of connections, low-power consumption, low-cost terminals, such as Machine Type Communication (MTC), Narrow Band Internet of Things (NB-IoT). In the NR system, similar technologies are expected to be introduced to support other service types besides the eMBB service. The terminal supporting this kind of service has characteristics of low complexity, low cost and low capability, and is called RedCap terminal. As mentioned above, for RedCap terminals, it is necessary to consider enhancing uplink coverage of such terminals, such as introducing the retransmission of the Msg A, and how to determine number of retransmission of PRACH and PUSCH in the Msg A is a technical problem to be solved urgently in the present disclosure.

It should be noted that the technical solution of the present disclosure is not only applicable to the RedCap terminals, but also to other non-RedCap terminals, which are not limited herein by the present disclosure.

For example, the present disclosure may be applied to the following scenes, but not limited to: the transmission of the Msg A in the present disclosure is multiple Msg A transmissions corresponding to one RAR window.

The invention idea of the present disclosure is that the terminal device independently determines the number of retransmission of PRACH and PUSCH.

The technical scheme of the present disclosure will be described as follows.

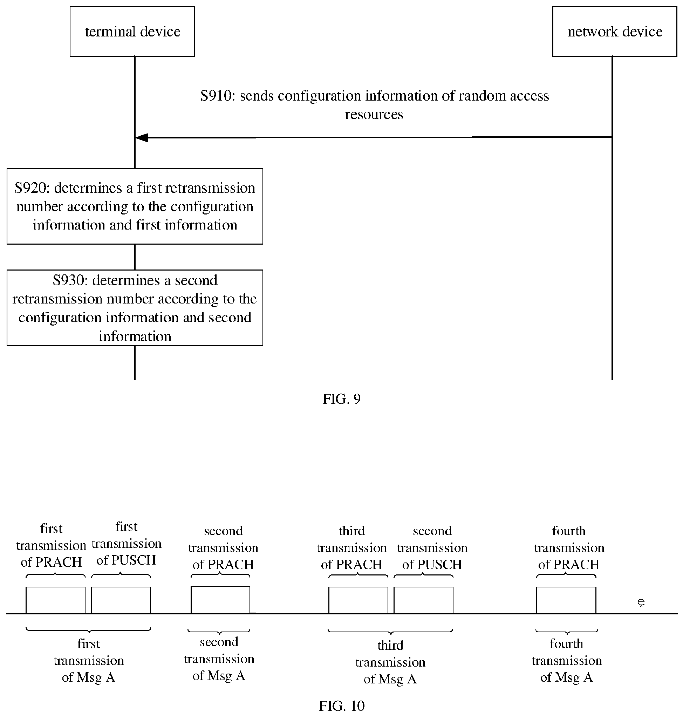

FIG. 9 is an interactive flow chart of a wireless communication method provided by some embodiments of the present disclosure. As shown in FIG. 9, the method includes the following operations.

At block S910, a network device sends configuration information of random access resources to a terminal device.

At block S920, the terminal device determines a first retransmission number according to the configuration information and first information.

At block S930, the terminal device determines a second retransmission number according to the configuration information and second information.

The first retransmission number is a number of retransmission of PRACH. The second retransmission number is a number of retransmission of PUSCH. The PRACH and the PUSCH are carried in the Msg A of type-2 random access.

Alternatively, the above configuration information of random access resources is understood as configuration information of multiple or multiple sets of random access resources. The configuration information of each type or each set of random access resources includes: time domain configuration information of random access resources, frequency domain configuration information, one of the numbers of retransmissions of the PRACH, and one of the numbers of retransmissions of the PUSCH. The configuration information of each type or each set of random access resources may be understood as having a corresponding relationship. Furthermore, the terminal device can select one of numbers of retransmissions of the PRACH from the configuration information of multiple or multiple sets of random access resources in cooperation with the first information, that is, the first retransmission number. The terminal device can also select one of numbers of retransmissions of the PUSCH from the configuration information of multiple or multiple sets of random access resources in cooperation with the second information, that is, the second retransmission number. Moreover, the terminal device transmits the PRACH according to the time domain configuration information and the frequency domain configuration information of the random access resource corresponding to the first retransmission number, and transmits the PUSCH according to the time domain configuration information and the frequency domain configuration information of the random access resource corresponding to the second retransmission number.

Alternatively, the configuration information of the above multiple or multiple sets of random access resources may be the configuration information of random access resources corresponding to the first information of different terminal devices.

Alternatively, the above configuration information of random access resources is be understood to include: time domain configuration information and frequency domain configuration information of one or one set of random access resources, at least one of numbers of the retransmissions of the PRACH and at least one of numbers of the retransmissions of the PUSCH. That is, the at least one of numbers of the retransmissions of the PRACH corresponds to the common time domain configuration information and frequency domain configuration information of one or one set of random access resources. Similarly, the at least one of numbers of the retransmissions of the PUSCH corresponds to the common time domain configuration information and frequency domain configuration information of one or one set of random access resources. In addition, the terminal device can select one of the numbers of retransmissions of the PRACH from multiple kinds or multiple numbers of retransmissions of PRACH in cooperation with the first information, that is, the first retransmission number is obtained. The terminal device can also select one of the numbers of retransmissions of the PUSCH from multiple numbers of retransmissions of PUSCH in cooperation with the second information, that is, the second retransmission number is obtained. In addition, the terminal device transmits the PRACH and the PUSCH according to the time domain configuration information and the frequency domain configuration information of one or one set of random access resources.

It should be understood that, as described in the third point of relevant knowledge, the time domain configuration information includes, but is not limited to, preamble format, period, wireless frame offset, subframe number in the wireless frame, starting symbol in the subframe, the number of PRACH time slots in the subframe, the number of PRACH occasions in PRACH time slot, duration of PRACH occasion, and the like. The frequency domain configuration information includes, but is not limited to, at least one of the following items: the frequency domain starting position of RACH resources, the number of frequency domain PRACH occasions, and the like.

Alternatively, a corresponding relationship is defined between the above first information and the first retransmission number, and the terminal device can determine the first retransmission number based on the corresponding relationship and the first information.

Alternatively, the corresponding relationship between the above first information and the first retransmission number may be configured through the network device, such as through SIB, specifically, may be indicated through SIB1.

Alternatively, a corresponding relationship is defined between the above second information and the second retransmission number, and the terminal device can determine the second retransmission number based on the corresponding relationship and the second information.

Alternatively, the corresponding relationship between the above second information and the second retransmission number may be configured through network devices, such as through SIB, specifically, may be indicated through SIB1.

Alternatively, the first information includes, but is not limited to, at least one of a type, a capability, and a RSRP measurement result of the above terminal device.

Alternatively, the second information includes at least one of the type, the capability and the RSRP measurement result of the terminal device.

Alternatively, the capability of the terminal device may be measured by, but not limited to, at least one of the followings: the number of transmitting antennas, the number of receiving antennas, the size of transmitting antennas, the size of receiving antennas, the gain of transmitting antennas, the gain of receiving antennas, and the like. For example, for the wearable device, the size of the transmitting antenna is limited, and there is a loss of the gain of the transmitting antenna. Therefore, the capability of such device is relatively low. For example, the capability of such devices may be determined as capability 1. For a non-wearable device in the Redcap terminal, the size of the transmitting antenna may not be limited, and there will be no loss of the gain of the transmitting antenna. Therefore, the capability of such device is relatively high. For example, the capability of such devices may be determined as capability 2.

Alternatively, the types of terminal device can include, but are not limited to, wearable type, video monitoring type, sensor type, etc. Alternatively, the type of terminal device may be determined according to the capability of the terminal device. For example, the type of terminal device with capability 1 is type-1, and the type of terminal device with capability 2 is type-2.

It should be understood that the RSRP measurement result is a RSRP measurement result obtained by the terminal device performing the RSRP measurement on the SSB.

It should be understood that the RSRP measurement results of SSB may meet different thresholds for the terminal devices with different capabilities or types. Therefore, the network device can configure multiple RSRP thresholds to determine range of multiple RSRPs according to the multiple RSRP thresholds. The network device can also configure the corresponding relationship between the range of multiple RSRPs and the multiple numbers of retransmissions of PRACH, and the corresponding relationship between the range of the multiple RSRPs and the multiple numbers of retransmissions of PUSCH. For example, the network device configures at least one of the corresponding relationship between the range of multiple RSRPs and multiple retransmissions of PRACH and the corresponding relationship between the range of multiple RSRPs and the multiple numbers of retransmissions of PUSCH through SIB, specifically, such corresponding relationship may be indicated through SIB1.

It should be understood that the above multiple RSRP thresholds can also be predefined, the corresponding relationship between the range of multiple RSRPs and multiple numbers of retransmissions of PRACH can also be predefined, and the corresponding relationship between the range of multiple RSRPs and multiple numbers of retransmissions of PUSCH can also be predefined, which is not limited in the present disclosure.

Alternatively, after receiving the above RSRP measurement result, the terminal device can determine range of the RSRP where the RSRP measurement result is located, and can determine the number of retransmission of PRACH corresponding to the range of the RSRP, that is, the first retransmission number, according to the range of the RSRP, and the corresponding relationship between the range of multiple RSRPs and the multiple numbers of retransmissions of PRACH. Similarly, the terminal device can also determine the number of retransmission of PUSCH corresponding to the range of the RSRP, that is, the second retransmission number, according to the range of the RSRP and the corresponding relationship between the range of multiple RSRPs and the number of retransmission of PUSCH.

It should be understood that the first information and the second information of the above terminal device may be the same or different. For example, the first information and the second information of the terminal device are both of the type of the terminal device. For another example, the first information of the terminal device is the type of the terminal device, and the second information is the RSRP measurement result of the terminal device.

It should be understood that the first retransmission number and the second retransmission number may be the same or different.

To sum up, in the present disclosure, for the Msg A of the type-2 random access, the terminal device can independently determine the number of the retransmission of the PRACH and the number of the retransmission of the PUSCH. Particularly for RedCap terminals, due to the possible coverage difference between the PRACH and the PUSCH, the technical solution of the present disclosure can flexibly carry out the retransmissions of the PRACH and the retransmissions of the PUSCH, thereby saving resource costs, improving resource utilization and achieving the purpose of terminal power saving. There is no need that the number of the retransmission of the PRACH and the number of the retransmission of the PUSCH are the same, resulting in the binding of the retransmissions between the two.

Alternatively, the first retransmission number is M, the second retransmission number is N, and both N and M are positive integers. A corresponding relationship is defined between N numbers of PRACHs and M numbers of PUSCHs.

It should be understood that, as described in the relevant knowledge section, a mapping relationship is defined between the preamble of PRACH of Msg A and PUSCH. For a preamble in an effective PRACH occasion, PUSCH mapped with the preamble may be uniquely determined. When the number of the retransmission of the PRACH and the number of the retransmission of the PUSCH are different, for example, when the number of the retransmission of the PUSCH is less than the number of the retransmission of the PRACH, it is necessary to determine which PRACH mapped the PUSCH resources which are used to perform the retransmission of the PUSCH.

Alternatively, the terminal device can receive instruction information, and the instruction information is configured to indicate the corresponding relationship between N number of PARCHs and M number of PUSCHs. For example, the network device can configure the position of the corresponding retransmission of the PUSCH in the retransmission of the PRACH in the Msg A. For example, the position of the corresponding PUSCH retransmission is indicated by the bitmap. Assuming that the number of the retransmission of the PRACH is 8 and the number of the retransmission of the PUSCH is 4, 8-bit bitmap is used to indicate which transmissions of the PRACH have corresponding transmission of the PUSCH. For example, when "1" in "10101010" indicates, there is a corresponding transmission of PUSCH in the transmission of PRACH.

Alternatively, the corresponding relationship between the above N number of PARCHs and M number of PUSCHs can also be predefined. For example, in a predefined way, it is specified that there are corresponding PUSCH transmissions for odd-numbered or even-numbered transmissions in the retransmission of PRACH, or there are corresponding PUSCH transmissions for the first N numbers of or last N numbers of retransmissions of PRACH.

For example, FIG. 10 is a schematic diagram of a Msg A retransmission provided by some embodiments of the present disclosure. As shown in FIG. 10, a first transmission and a third transmission of the Msg A include PRACH and PUSCH, and the second transmission and fourth transmission only include the PRACH. That is, in the retransmission of the PRACH, the odd-numbered transmissions include PUSCH transmissions, the even-numbered transmissions do not include PUSCH transmissions.

To sum up, in the present disclosure, the terminal device can determine which PRACH mapped PUSCH resources which are used to perform the retransmission of the PUSCH according to the instructions or predefined ways.

The above two embodiments are for type-2 random access. The following will describe the technical solutions involved in the process of type-1 random access.

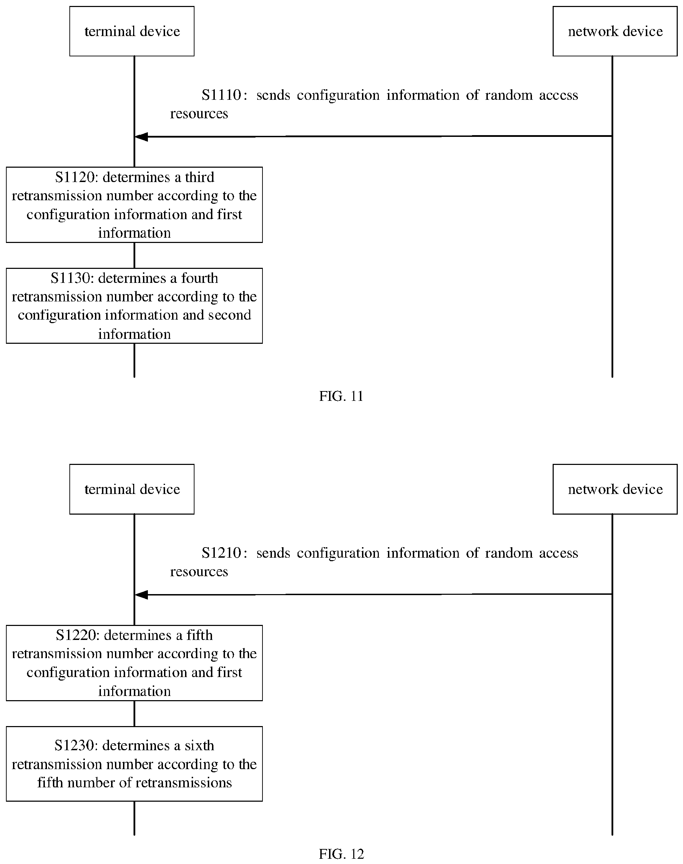

FIG. 11 is an interactive flow chart of another wireless communication method provided by some embodiments of the present disclosure. As shown in FIG. 11, the method includes the following operations.

At block S1110, a terminal device obtains configuration information of random access resources.

At block S1120, the terminal device determines a third retransmission number according to the configuration information and first information.

At block S1130, the terminal device determines a fourth retransmission number according to the configuration information and second information.

The first information includes at least one of a type, a capability, and a RSRP measurement result of the above terminal device. The second information includes at least one of the type, the capability and the RSRP measurement result of the terminal device. The RSRP measurement result is a RSRP measurement result obtained by the terminal device performing the RSRP measurement on the SSB.

The third retransmission number is a number of retransmission of PRACH of type-1 random access. The fourth retransmission number is a number of retransmission of PUSCH of type-1 random access.

Alternatively, the above configuration information of random access resources is understood as configuration information of multiple or multiple sets of random access resources. The configuration information of each type or set of random access resources includes: time domain configuration information of random access resources, frequency domain configuration information, one of numbers of retransmissions of the PRACH, and one of numbers of retransmissions of the PUSCH. The configuration information of each type or each set of random access resources is understood as having a corresponding relationship. Furthermore, the terminal device can select one of the numbers of the retransmissions of the PRACH from the configuration information of multiple or multiple sets of random access resources in cooperation with the first information, that is, the third retransmission number. The terminal device can also select one of the numbers of the retransmissions of the PUSCH from the configuration information of multiple or multiple sets of random access resources in cooperation with the second information, that is, the fourth retransmission number. Moreover, the terminal device transmits the PRACH according to the time domain configuration information and the frequency domain configuration information of the random access resource corresponding to the third retransmission number, and transmits the PUSCH according to the time domain configuration information and the frequency domain configuration information of the random access resource corresponding to the fourth retransmission number.

Alternatively, the configuration information of the above multiple or multiple sets of random access resources may be the configuration information of random access resources corresponding to the first information of different terminal devices.

Alternatively, the above configuration information of random access resources can also be understood to include: time domain configuration information and frequency domain configuration information of one or one set of random access resources, at least one of numbers of the retransmissions of the PRACH and at least one of numbers of the retransmissions of the PUSCH. That is, the at least one of numbers of the retransmissions of the PRACH corresponds to the common time domain configuration information and frequency domain configuration information of one or one set of random access resources. Similarly, the at least one of numbers of the retransmissions of the PUSCH corresponds to the common time domain configuration information and frequency domain configuration information of one or one set of random access resources. In addition, the terminal device can select one of the numbers of retransmissions of the PRACH from the multiple or multiple numbers of retransmissions of PRACH in cooperation with the first information, that is, the third retransmission number is obtained. The terminal device can also select one of the numbers of retransmissions of the PUSCH from the multiple numbers of retransmissions of PUSCH in cooperation with the second information, that is, the fourth retransmission number is obtained. In addition, the terminal device transmits the PRACH and the PUSCH according to the time domain configuration information and the frequency domain configuration information of one or one set of random access resources.

It should be understood that, as described in the third point of relevant knowledge, the time domain configuration information includes, but is not limited to, a preamble format, a period, a wireless frame offset, a subframe number in the wireless frame, a starting symbol in the subframe, the number of PRACH time slots in the subframe, the number of PRACH occasions in PRACH time slot, duration of PRACH occasion, and the like. The frequency domain configuration information includes, but is not limited to, at least one of the following items: the frequency domain starting position of RACH resources, the number of frequency domain PRACH occasions, and the like.

Alternatively, a corresponding relationship is defined between the first information and the third retransmission number, and the terminal device can determine the third retransmission number based on the corresponding relationship and the first information.

Alternatively, the corresponding relationship between the above first information and the third retransmission number may be configured through the network device, such as through SIB, specifically, may be indicated through SIB1.

Alternatively, a corresponding relationship is defined between the above second information and the fourth retransmission number, and the terminal device can determine the fourth retransmission number based on the corresponding relationship and the second information.

Alternatively, the corresponding relationship between the above second information and the fourth retransmission number may be configured through network devices, such as through SIB, specifically, may be indicated through SIB1.

It should be noted that the capability, the type and the RSRP measurement results of the terminal device can refer to the contents of the embodiment shown in FIG. 9, which will not be repeated in the present disclosure.

It should be understood that the first information and the second information of the above terminal device may be the same or different. For example, the first information and the second information of the terminal device are both of the type of the terminal device. For another example, the first information of the terminal device is the type of the terminal device, and the second information is the RSRP measurement result of the terminal device.

It should be understood that the above third retransmission number and the above fourth retransmission number may be the same or different.

To sum up, in the present disclosure, in order to meet the demand of coverage enhancement, the terminal device can determine the number of the retransmission of the PRACH and the number of the retransmission of the PUSCH before receiving the corresponding response. Furthermore, the terminal device can determine the number of the retransmission of the PRACH based on the first information and can determine the number of the retransmission of the PUSCH based on the second information.

FIG. 12 is an interactive flow chart of another wireless communication method provided by some embodiments of the present disclosure. As shown in FIG. 12, the method includes the following operations.

At block S1210, a terminal device obtains configuration information of random access resources.

At block S1220, the terminal device determines a fifth retransmission number according to the configuration information and first information.

At block S1230, the terminal device determines a sixth retransmission number according to the fifth retransmission number.

The fifth retransmission number is a number of retransmission of PRACH. The sixth retransmission number is a number of retransmission of PUSCH. The PRACH and the PUSCH are carried in a Msg A of type-2 random access. Alternatively, the fifth retransmission number is a number of retransmission of PRACH of type-1 random access. The sixth retransmission number is a number of retransmission of PUSCH of type-1 random access.

It should be noted that the configuration information of random access resources may be seen in the embodiment shown in FIG. 9, which will not be repeated in the present disclosure.

The difference between the embodiment and the above three embodiments is that in the embodiment, the terminal device can determine the number of retransmission of PUSCH according to the number of retransmission of PRACH.

Alternatively, a corresponding relationship is defined between the number of retransmission of PRACH and the number of retransmission of PUSCH, that is, a corresponding relationship is defined between the fifth retransmission number and the sixth retransmission number.

For example, the number of retransmission of PRACH can include: 1, 2, 4, 8, 16, 32, and the number of retransmission of corresponding PUSCH may be: 1, 1, 2, 4, 8, 16.

Alternatively, the corresponding relationship between the fifth retransmission number and the sixth retransmission number is configured or predefined by the network device, but not limited to this.

To sum up, in the present disclosure, the terminal device can determine the number of retransmission of PUSCH according to the number of retransmission of PRACH. Although a binding relationship is defined between the number of retransmission of PUSCH according to the number of retransmission of PRACH, in the present disclosure, the number of retransmission of PRACH and the number of retransmission of PUSCH are not limited to be the same. For example, the network device can configure the corresponding relationship between the two according to the uplink coverage of PRACH and the uplink coverage of PUSCH, thereby flexibly realizing the retransmission of PRACH and PUSCH.

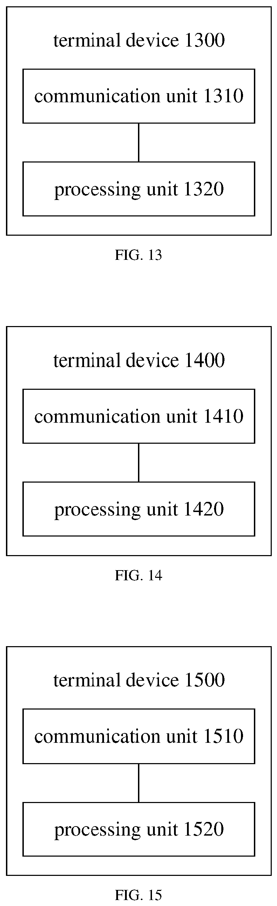

The method embodiments of the present disclosure are described in detail above in cooperation with FIGs. 9 to 12, and the device embodiments of the present disclosure are described in detail below in cooperation with FIGs. 13 to 21. It should be understood that the device embodiments and the method embodiments correspond to each other, and similar descriptions can refer to the method embodiments.

FIG. 13 shows a schematic block diagram of a terminal device 1300 according to some embodiments of the present disclosure. As shown in FIG. 13, the terminal device 1300 includes a communication unit 1310 and a processing unit 1320. The communication unit 1310 is configured to obtain configuration information of random access resources; the processing unit 1320 is configured to determine a first retransmission number according to the configuration information and first information, and determine a second retransmission number according to the configuration information and second information. The first retransmission number is a number of retransmission of PRACH. The second retransmission number is a number of retransmission of PUSCH. The PRACH and the PUSCH are carried in a Msg A of type-2 random access.

Alternatively, the configuration information includes: at least one of numbers of the retransmissions of the PRACH. A corresponding relationship is defined between the first information and the first retransmission number among the at least one of the numbers of retransmissions.

Alternatively, the configuration information includes: at least one of numbers of the retransmissions of the PUSCH. A corresponding relationship is defined between the second information and the second retransmission number among the at least one of the numbers of retransmissions.

Alternatively, the first information includes at least one of a type, a capability and a RSRP measurement result of the terminal device. The second information includes at least one of the type, the capability and the RSRP measurement result of terminal device. The RSRP measurement result is a RSRP measurement result obtained by by the terminal device performing the RSRP measurement on the SSB.

Alternatively, the first retransmission number and the second retransmission number are the same or different.

Alternatively, the first retransmission number is M, the second retransmission number is N, and both N and M are positive integers. A corresponding relationship is defined between N numbers of PRACHs and M numbers of PUSCHs.

Alternatively, the communication unit 1310 is further configured to receive instruction information, and the instruction information is configured to indicate the corresponding relationship between N number of PARCHs and M number of PUSCHs.

Alternatively, the corresponding relationship between N number of PARCHs and M number of PUSCHs is predefined.

Alternatively, the second retransmission number is less than the first retransmission number.

Alternatively, in some embodiments, the above communication unit may be a communication interface or transceiver, or an input/output interface of a communication chip or a system on a chip. The above processing unit may be one or more processors.

It should be understood that the terminal device 1300 according to the embodiment of the present disclosure can correspond to the terminal device in the embodiment of the corresponding method in FIG. 9, and the above and other operations and/or functions of each unit in the terminal device 1300 are respectively to realize the corresponding process of the terminal device in the embodiment of the corresponding method in FIG. 9, which will not be described herein for brevity.

FIG. 14 shows a schematic block diagram of a terminal device 1400 according to some embodiments of the present disclosure. As shown in FIG. 14, the terminal device 1400 includes a communication unit 1410 and a processing unit 1420. The communication unit 1410 is configured to obtain configuration information of random access resources. The processing unit 1420 is configured to determine a third retransmission number according to the configuration information and first information, and is configured to determine a fourth retransmission number according to the configuration information and second information. The first information includes at least one of the following items: a type, a capability and a RSRP measurement result of terminal device. The second information includes at least one of the type, the capability and the RSRP measurement result of the terminal device. The RSRP measurement result is a RSRP measurement result obtained by the terminal device performing the RSRP measurement on the SSB. The third retransmission number is a number of retransmission of PRACH of type-1 random access. The fourth retransmission number is a number of retransmission of PUSCH of type-1 random access.

Alternatively, the configuration information includes at least one of numbers of the retransmissions of the PRACH. A corresponding relationship is defined between the first information and the third retransmission number among the at least one of the numbers of retransmissions.

Alternatively, the configuration information includes: at least one of numbers of the retransmissions of the PUSCH. A corresponding relationship is defined between the second information and the fourth retransmission number among the at least one of the numbers of retransmissions.

Alternatively, the third retransmission number and the fourth retransmission number are the same or different.

Alternatively, in some embodiments, the above communication unit may be a communication interface or transceiver, or an input/ output interface of a communication chip or a system on a chip. The above processing unit may be one or more processors.

It should be understood that the terminal device 1400 according to the embodiment of the present disclosure can correspond to the terminal device in the embodiment of the corresponding method in FIG. 11, and the above and other operations and/or functions of each unit in the terminal device 1400 are respectively to realize the corresponding process of the terminal device in the embodiment of the corresponding method in FIG. 11, which will not be described herein for brevity.

FIG. 15 shows a schematic block diagram of a terminal device 1500 according to some embodiments of the present disclosure. As shown in FIG. 15, the terminal device 1500 includes a communication unit 1510 and a processing unit 1520. The communication unit 1510 is configured to obtain configuration information of random access resources The processing unit 1520 is configured to determine a fifth retransmission number according to the configuration information and first information, and is configured to determine a sixth retransmission number according to the fifth retransmission number. The fifth retransmission number is a number of retransmission of PRACH. The sixth retransmission number is a number of retransmission of PUSCH. The PRACH and the PUSCH are carried in a Msg A of type-2 random access. Alternatively, the fifth retransmission number is a number of retransmission of PRACH of type-1 random access, and the sixth retransmission number is a number of retransmission of PUSCH of type-1 random access.

Alternatively, the configuration information includes at least one of numbers of the retransmissions of the PRACH. A corresponding relationship is defined between the first information and the fifth retransmission number among the at least one of the numbers of retransmissions.

Alternatively, the first information includes at least one of a type, a capability and a RSRP measurement result of the terminal device. The RSRP measurement result is a RSRP measurement result obtained by the terminal device performing the RSRP measurement on the SSB.

Alternatively, a corresponding relationship is defined between the fifth retransmission number and the sixth retransmission number.

Alternatively, the corresponding relationship between the fifth retransmission number and the sixth retransmission number is configured or predefined by the network device.

Alternatively, in some embodiments, the above communication unit may be a communication interface or transceiver, or an input/output interface of a communication chip or a system on a chip. The above processing unit may be one or more processors.

It should be understood that the terminal device 1500 according to the embodiment of the present disclosure can correspond to the terminal device in the embodiment of the corresponding method in FIG. 12, and the above and other operations and/or functions of each unit in the terminal device 1500 are respectively to realize the corresponding process of the terminal device in the embodiment of the corresponding method in FIG. 12. For simplicity, it is not repeated here.

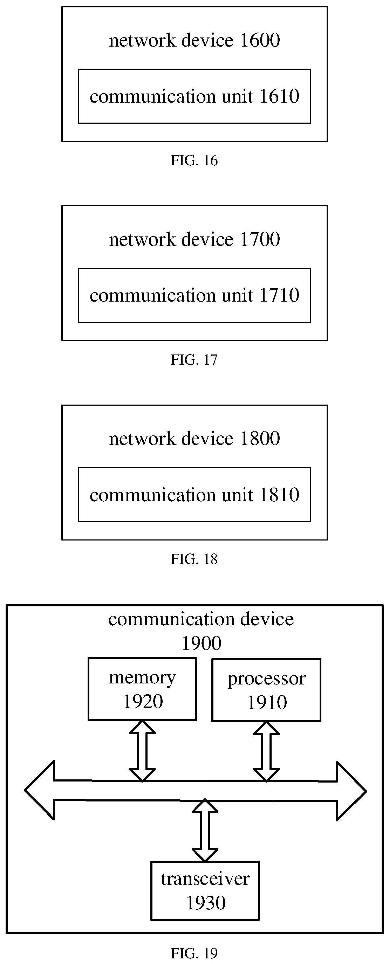

FIG. 16 shows a schematic block diagram of a network device 1600 according to some embodiments of the present disclosure. As shown in FIG. 16, the network device 1600 includes a communication unit 1610 and the communication unit 1610 is configured to send configuration information of random access resources to a terminal device. The configuration information is configured to determine a first retransmission number in cooperation with first information, and is configured to determine to a second retransmission number by configuring second information. The first retransmission number is a number of retransmission of PRACH. The second retransmission number is a number of retransmission of PUSCH. The PRACH and the PUSCH are carried in Msg A of type-2 random access.

Alternatively, the configuration information includes at least one of numbers of the retransmissions of the PRACH. A corresponding relationship is defined between the first information and the first retransmission number among the at least one of the numbers of retransmissions.

Alternatively, the configuration information includes: at least one of numbers of the retransmissions of the PUSCH. A corresponding relationship is defined between the second information and the second retransmission number among the at least one of the numbers of retransmissions.

Alternatively, the first information includes at least one of a type, a capability and a RSRP measurement result of the terminal device The second information includes at least one of the type, the capability and the RSRP measurement results of the terminal device. The RSRP measurement result is a RSRP measurement result obtained by the terminal device performing the RSRP measurement on the SSB.

Alternatively, the first retransmission number and the second retransmission number are the same or different.

Alternatively, the first retransmission number is M, the second retransmission number is N, and both N and M are positive integers; a corresponding relationship is defined between N number of PRACHs and M number of PUSCHs.

Alternatively, the communication unit is further configured to send instruction information to the terminal device, and the instruction information is configured to indicate the corresponding relationship between N number of PARCHs and M number of PUSCHs.

Alternatively, the corresponding relationship between N number of PARCHs and M number of PUSCHs is predefined.

Alternatively, the second retransmission number is less than the first retransmission number.

Alternatively, in some embodiments, the above communication unit may be a communication interface or transceiver, or an input/output interface of a communication chip or a system on a chip.

It should be understood that the network device 1600 according to the embodiment of the present disclosure can correspond to the network device in the embodiment of the corresponding method in FIG. 9, and the above and other operations and/or functions of each unit in the network device 1600 are respectively to realize the corresponding flow of the network device in the embodiment of the corresponding method in FIG. 9, which will not be described herein for brevity.

FIG. 17 shows a schematic block diagram of a network device 1700 according to some embodiments of the present disclosure. As shown in FIG. 17, the network device 1700 includes a communication unit 1710 and the communication unit 1610 is configured to send configuration information of random access resources to a terminal device. The configuration information is configured to determine a third retransmission number by configuring first information, and is configured to determine a fourth retransmission number in cooperation with second information. The first information includes at least one of a type, a capability, and a RSRP measurement result of the terminal device. The second information includes at least one of the type, the capability, and the RSRP measurement result of the terminal device. The RSRP measurement result is a RSRP measurement result obtained by the terminal device performing the RSRP measurement on the SSB. The third retransmission number is a number of retransmission of PRACH of type-1 random access. The fourth retransmission number is a number of retransmission of PUSCH of type-1-random access.

Alternatively, the configuration information includes at least one of numbers of the retransmissions of the PRACH. a corresponding relationship is defined between the first information and the third retransmission number among the at least one of the numbers of retransmissions.

Alternatively, the configuration information includes at least one of numbers of the retransmissions of the PUSCH. a corresponding relationship is defined between the second information and the fourth retransmission number among the at least one of the numbers of retransmissions.

Alternatively, the third retransmission number and the fourth retransmission number are the same or different.

Alternatively, in some embodiments, the above communication unit may be a communication interface or transceiver, or an input/output interface of a communication chip or a system on a chip.

It should be understood that the network device 1700 according to the embodiment of the present disclosure can correspond to the network device in the embodiment of the corresponding method in FIG. 11, and the above and other operations and/or functions of each unit in the network device 1700 are respectively to achieve the corresponding process of the network device in the embodiment of the corresponding method in FIG. 11, which will not be described herein for brevity.

FIG. 18 shows a schematic block diagram of a network device 1800 according to some embodiments of the present disclosure. As shown in FIG. 18, the network device 1800 includes a communication unit 1810, and the communication unit 1810 is configured to send configuration information of random access resources to a terminal device. The configuration information is configured to determine a fifth retransmission number in cooperation with first information. The fifth retransmission number is configured to determine a sixth retransmission number. The fifth retransmission number is a number of retransmission of PRACH. The sixth retransmission number is a number of retransmission of PUSCH. The PRACH and the PUSCH are carried in Msg A of type-2 random access. Alternatively, the fifth retransmission number is a number of retransmission of PRACH of type-1 random access. The sixth retransmission number is a number of retransmission of PUSCH of type-1 random access.

Alternatively, the configuration information includes at least one of numbers of the retransmissions of the PRACH. a corresponding relationship is defined between the first information and the fifth retransmission number among the at least one of the numbers of retransmissions.

Alternatively, the first information includes at least one of a type, a capability, a RSRP measurement result of the terminal device. The RSRP measurement result is a RSRP measurement result obtained by the terminal device performing the RSRP measurement on the SSB.

Alternatively, a corresponding relationship is defined between the fifth retransmission number and the sixth retransmission number.

Alternatively, the corresponding relationship between the fifth retransmission number and the sixth retransmission number is configured or predefined by the network device.

Alternatively, in some embodiments, the above communication unit may be a communication interface or transceiver, or an input/output interface of a communication chip or a system on a chip.

It should be understood that the network device 1800 according to the embodiment of the present disclosure can correspond to the network device in the embodiment of the corresponding method in FIG. 12, and the above and other operations and/or functions of each unit in the network device 1800 are respectively to achieve the corresponding process of the network device in the embodiment of the corresponding method in FIG. 12, which will not be described herein for brevity.

FIG. 19 is a schematic structure diagram of a communication device 1900 provided by some embodiments of the present disclosure. The communication device 1900 shown in FIG. 19 includes a processor 1910, and the processor 1910 can call and run a computer program from a memory to implement the method in the embodiment of the present disclosure.

Alternatively, as shown in FIG. 19, the communication device 1900 may also include a memory 1920. The processor 1910 can call and run the computer program from the memory 1920 to execute the method in the embodiment of the present disclosure.

The memory 1920 may be a separate device independent of the processor 1910 or integrated into the processor 1910.

Alternatively, as shown in FIG. 19, the communication device 1900 may also include a transceiver 1930, and the transceiver 1930 may be controlled by the processor 1910 to communicate with other devices. Specifically, information or data may be sent to or received from other devices.

The transceiver 1930 can include a transmitter and a receiver. The transceiver 1930 can further include an antenna, and the number of antennas may be one or more.

Alternatively, the communication device 1900 can specifically be a network device according to the embodiments of the present disclosure, and the communication device 1900 can execute the corresponding processes executed by the network device in various methods of the embodiments of the present disclosure, which will not be described herein for brevity.

Alternatively, the communication device 1900 may be a terminal device of the present disclosure embodiment, and the communication device 1900 can execute the corresponding processes executed by the terminal device in various methods of the present disclosure embodiment, which will not be described herein for brevity.

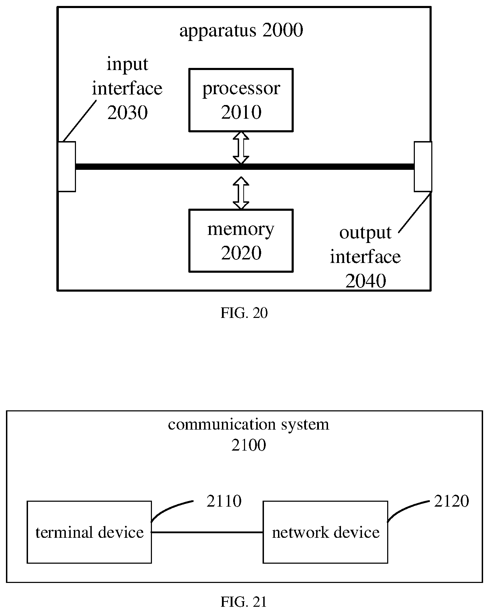

FIG. 20 is a schematic structure diagram of an apparatus provided by some embodiments of the present disclosure. The apparatus 2000 shown in FIG. 20 includes a processor 2010, and the processor 2010 can call and run computer programs from a memory to execute the method in the embodiment of the present disclosure.

Alternatively, as shown in FIG. 20, the apparatus 2000 may also include a memory 2020. The processor 2010 can call and run a computer program from the memory 2020 to execute the method in the embodiment of the present disclosure.

The memory 2020 may be a separate device independent of the processor 2010 or maybe integrated into the processor 2010.

Alternatively, the apparatus 2000 may also include an input interface 2030. The input interface 2030 may be controlled by the processor 2010 to communicate with other devices or chips, and specifically, can obtain information or data sent by other devices or chips.

Alternatively, the apparatus 2000 may also include an output interface 2040. The output interface 2040 may be controlled by the processor 2010 to communicate with other devices or chips, specifically, can output information or data to other devices or chips.

Alternatively, the apparatus may be applied to a network device in the embodiments of the present disclosure, and the apparatus can execute the corresponding processes executed by the network device in the various methods of the embodiments of the present disclosure, which will not be described herein for brevity.

Alternatively, the apparatus may be applied to a terminal device in the embodiments of the present disclosure, and the apparatus can execute the corresponding processes executed by the terminal device in various methods of the embodiments of the present disclosure. For simplicity, this will not be repeated here.

Alternatively, the apparatus mentioned in the embodiment of the present disclosure can also be a chip, such as a system level chip, a system chip, a chip system or a chip system on a chip.

FIG. 21 is a schematic block diagram of a communication system 2100 provided by some embodiments of the present disclosure. As shown in FIG. 21, the communication system 2100 includes a terminal device 2110 and a network device 2120.

The terminal device 2110 may be configured to execute the corresponding functions executed by the terminal device in the above method, and the network device 2120 may be configured to execute the corresponding functions executed by the network device or base station in the above method, which will not be described herein for brevity.

It should be understood that the processor of the embodiment of the present disclosure may be an integrated circuit chip with the capability of processing signal. In the implementation process, each step of the above method embodiment may be completed by an integrated logic circuit of the hardware in the processor or instructions in the form of software. The above processor may be a general-purpose processor, a digital signal processor (DSP), an application specific integrated circuit (ASIC), a field programmable gate arrays (FPGA) or other programmable logic devices, a discrete gate or a transistor logic device, or a discrete hardware component. Each method, step and logic block diagram disclosed in the embodiments of the present disclosure may be executed or executed. The general-purpose processor may be a microprocessor or the processor may also be any conventional processor, or the like. The steps of the method disclosed by the embodiments of the present disclosure may be directly executed by a hardware decoding processor or executed by the combination of hardware and software modules in the decoding processor. The software module may be located in a random access memory, a flash memory, a read-only memory, a programmable read-only memory or an electrically erasable programmable memory, a register and other mature storage media in the field. The storage medium is located in the memory, and the processor reads the information in the memory, and completes the steps of the above method in cooperation with the hardware.

It may be understood that the memory in the embodiment of the present disclosure may be volatile memory or non-volatile memory, or may include both the volatile and the non-volatile memory. The non-volatile memory may be a read-only memory (ROM), a programmable ROM (PROM), an erasable PROM (EPROM), an electrically erasable EPROM (EEPROM) or a flash memory. The volatile memory may be a random access memory (RAM), and the random access memory is used as external cache. By way of illustration, but not limitation, many forms of RAM are available, such as static RAM (SRAM), dynamic PAM (DRAM), synchronous dynamic PAM (SDRAM), double data rate SDRAM (DDR SDRAM), enhanced SDRAM (ESDRAM), synchlink DRAM (SLDRAM) and direct rambus RAM (DR RAM). It should be noted that the memory of the systems and methods described herein is intended to include, but not limited to, these and any other suitable types of memories.

It should be understood that the above memory is illustrative but not limiting descriptions. For example, the memory in the embodiment of the present disclosure may also be static RAM (SRAM), dynamic RAM (DRAM), synchronous DRAM (SDRAM), double data rate SDRAM (DDR SDRAM) Enhanced SDRAM (ESDRAM), synchlink DRAM (SLDRAM), and direct rambus RAM (DR RAM), etc. That is to say, the memory in the embodiment of the present disclosure is intended to include but not limited to these and any other suitable types of memories.

Some embodiments of the present disclosure also provide a computer-readable storage medium, which is configured to store a computer program.

Alternatively, the computer-readable storage medium may be applied to the network device or base station in the embodiments of the present disclosure, and the computer program causes the computer to perform the corresponding processes executed by the network device or the base station in the various methods of the embodiments of the present disclosure, which will not be described herein for brevity.

Alternatively, the computer-readable storage medium may be applied to the mobile terminal or the terminal device in the embodiments of the present disclosure, and the computer program causes the computer to execute the corresponding processes executed by the mobile terminal or the terminal device in the various methods of the embodiment of the present disclosure, which will not be described herein for brevity.

Some embodiments of the present disclosure also provide a computer program product including computer program instructions.

Alternatively, the computer program product may be applied to the network device or the base station in the embodiments of the present disclosure, and the computer program instructions cause the computer to execute the corresponding processes executed by the network device or the base station in the various methods of the embodiment of the present disclosure, which will not be described herein for brevity.

Alternatively, the computer program product may be applied to the mobile terminal or the terminal device in some embodiments of the present disclosure, and the computer program instructions cause the computer to execute the corresponding processes executed by the mobile terminal or the terminal device in the various methods of some embodiments of the present disclosure, which will not be described herein for brevity.

Some embodiments of the present disclosure also provide a computer program.

Alternatively, the computer program may be applied to the network device or the base station in the embodiments of the present disclosure. When the computer program is running on the computer, the computer will execute the corresponding processes executed by the network device or base station in the various methods of the embodiment of the present disclosure, which will not be described herein for brevity.

Alternatively, the computer program may be applied to the mobile terminal or the terminal device in the embodiment of the present disclosure. When the computer program is running on the computer, the computer will execute the corresponding processes executed by the mobile terminal or terminal device in the various methods of the embodiment of the present disclosure, which will not be described herein for brevity.

Those skilled in the art may realize that the units and algorithm steps of each example described in cooperation with the embodiments disclosed herein may be realized by the electronic hardware, or the combination of the computer software and the electronic hardware. Whether these functions are performed by manners of the hardware or the software depends on the specific application and design constraints of the technical solution. Those skilled in the art may use different methods to achieve the described functions for each specific application.

Those skilled in the art can clearly understand that for the convenience and brevity of the description, the specific working processes of the systems, devices and units described above can refer to the corresponding processes in the embodiments of the above methods, which will not be repeated here.

In several embodiments provided in the present disclosure, it should be understood that the disclosed systems, apparatuses and methods may be realized by other means. For example, the embodiments of the apparatus described above are only schematic. For example, the division of the units is only a logical function division. There may be other division methods in actual implementation. For example, multiple units or components may be combined or integrated into another system, or some features may be ignored or not executed. On the other hand, the mutual coupling or direct coupling or communication connection between each other shown or discussed may be indirect coupling or communication connection through some interfaces, apparatuses or units, which may be electrical, mechanical or other forms.

The units described as separate components may or may not be physically separated, and the units displayed as the units may be or may not be physical units, that is, they may be located in one place, or may be distributed to multiple network units. Some or all of these units may be selected according to the actual needs to achieve the purpose of the embodiments.

In addition, each functional unit in each embodiment of the present disclosure may be integrated in one processing unit, or each unit can exist physically alone, or two or more units may be integrated in one unit.

The functions, when executed in the form of software functional unit and sold or used as an independent product, may be stored in a computer-readable storage medium. In view of this understanding, the technical solution of the present disclosure, or part of the technical solution that contributes to the prior art, or part of the technical solution may be embodied in the form of the software product that is stored in the storage medium and includes several instructions to cause a computer device (which may be a personal computer, a server, or a network device, etc.) to perform all or part of the steps of the method described in each of the embodiments of the present disclosure. The above storage media include: USB flash disk, removable hard disk, Read-Only Memory (ROM), Random Access Memory (RAM), magnetic disk or optical disk and other media that can store program code.

**Claims**

1. A wireless communication method, **characterized by** comprising:

   obtaining (S1110, S1210), by a terminal device, configuration information of random access resources; determining (S920), by the terminal device, a first retransmission number according to the configuration information and first information; and determining (S930), by the terminal device, a second retransmission number according to the configuration information and second information; wherein the first retransmission number is a number of retransmission of physical random access channel, PRACH; the second retransmission number is a number of retransmission of physical uplink shared channel, PUSCH; and the PRACH and the PUSCH are carried in a message Msg A of two-step random access; or
   determining (S1120), by the terminal device, a third retransmission number according to the configuration information and first information; and determining (S1130), by the terminal device, a fourth retransmission number according to the configuration information and second information; wherein the third retransmission number is a number of retransmission of PRACH of contention-based four-step random access, and the fourth retransmission number is a number of retransmission of PUSCH of the contention-based four-step random access; or
   determining (S1220), by the terminal device, a fifth retransmission number according to the configuration information and first information; and determining (S1230), by the terminal device, a sixth retransmission number according to the fifth retransmission number; wherein the fifth retransmission number is a number of retransmission of PRACH, the sixth retransmission number is a number of retransmission of PUSCH, and the PRACH and the PUSCH are carried in the Msg A of the two-step random access; or, the fifth retransmission number is a number of retransmission of PRACH of contention-based four-step random access, and the sixth retransmission number is a number of retransmission of the PUSCH of the contention-based four-step random access;
   wherein the first information comprises at least one of a type, a capability and a reference-signal receiving-power, RSRP, measurement result of the terminal device; the second information comprises at least one of the type, the capability and the RSRP measurement result of the terminal device; and the RSRP measurement result is a RSRP measurement result obtained by the terminal device performing RSRP measurement on a synchronization signal block, SSB.

2. The method as claimed in claim 1, wherein the configuration information comprises at least one of numbers of the retransmissions of the PRACH; and

   in a case where the method comprises the determining (S920), by the terminal device, a first retransmission number according to the configuration information and first information, a corresponding relationship is defined between the first information and the first retransmission number among the at least one of the numbers of retransmissions; and
   in a case where the method comprises the determining (S1120), by the terminal device, a third retransmission number according to the configuration information and first information, a corresponding relationship is defined between the first information and the third retransmission number among the at least one of the numbers of retransmissions; and
   in a case where the method comprises the determining (S1220), by the terminal device, a fifth retransmission number according to the configuration information and first information, a corresponding relationship is defined between the first information and the fifth retransmission number among the at least one of the numbers of retransmissions.

3. The method as claimed in claim 1, wherein the configuration information comprises at least one of numbers of the retransmissions of the PUSCH; and

   in a case where the method comprises the determining (S930), by the terminal device, a second retransmission number according to the configuration information and second information, a corresponding relationship is defined between the second information and the second retransmission number among the at least one of the numbers of retransmissions;
   in a case where the method comprises the determining, by the terminal device (S1130), a fourth retransmission number according to the configuration information and second information, a corresponding relationship is defined between the second information and the fourth retransmission number among the at least one of numbers of the retransmissions of the PUSCH;
   in a case where the method comprises the determining (S1230), by the terminal device, a sixth retransmission number according to the fifth retransmission number, a corresponding relationship is defined between the fifth retransmission number and the sixth retransmission number.

4. The method as claimed in any one of claims 1-3, wherein the first retransmission number and the second retransmission number are the same or different; or the second retransmission number is less than the first retransmission number; and the third retransmission number and the fourth retransmission number are the same or different.

5. The method as claimed in any one of claims 1-4, wherein the first retransmission number is M, the second retransmission number is N, and both N and M are positive integers; and a corresponding relationship is defined between N number of PRACHs and M number of PUSCHs.

6. The method as claimed in claim 5, further comprising:

   receiving, by the terminal device, instruction information configured to indicate the corresponding relationship between the N number of PRACHs and the M number of PUSCHs;
   wherein the corresponding relationship between the N number of PRACHs and the M number of PUSCHs is predefined.

7. The method as claimed in claim 3, wherein the corresponding relationship between the fifth retransmission number and the sixth retransmission number is configured or predefined by a network device.

8. A wireless communication method, comprising:

   sending (S910), by a network device, configuration information of random access resources to a terminal device; **characterized in that**, the configuration information is configured to determine a first retransmission number in cooperation with first information, and is configured to determine a second retransmission number by configuring second information; and the first retransmission number is a retransmission number of physical random access channel, PRACH; the second retransmission number is a retransmission number of physical uplink shared channel, PUSCH; and the PRACH and the PUSCH are carried in a message Msg A of two-step random access; or **characterized in that**, the configuration information is configured to determine a third retransmission number by configuring first information, and is configured to determine the fourth retransmission number in cooperation with second information; and the third retransmission number is a number of retransmission of PRACH of contention-based four-step random access; the fourth retransmission number is a number of retransmission of PUSCH of the contention-based four-step random access; or **characterized in that**, the configuration information is configured to determine a fifth retransmission number in cooperation with first information; and the fifth retransmission number is configured to determine the sixth retransmission number; and the fifth retransmission number is a number of retransmission of physical random access channel, PRACH; the sixth retransmission number is a number of retransmission of physical uplink shared channel, PUSCH; the PRACH and the PUSCH are carried in a Msg A of two-step random access; or, the fifth retransmission number is a number of retransmission of PRACH of contention-based four-step random access; and the sixth retransmission number is a number of retransmission of PUSCH of the contention-based four-step random access;
   wherein the first information comprises at least one of a type, a capability and a reference-signal receiving-power, RSRP, measurement result of the terminal device; the second information comprises at least one of the type, the capability and the RSRP measurement result of the terminal device; and the RSRP measurement result is a RSRP measurement result obtained by the terminal device performing RSRP measurement on a synchronization signal block, SSB.

9. The method as claimed in claim 8, wherein the configuration information comprises at least one of numbers of the retransmissions of the PRACH;

   in a case where the configuration information is configured to determine the first retransmission number in cooperation with the first information, a corresponding relationship is defined between the first information and the first retransmission number among the at least one of the numbers of retransmissions;
   in a case where the configuration information is configured to determine the third retransmission number by configuring the first information, a corresponding relationship is defined between the first information and the third retransmission number among the at least one of the numbers of retransmissions; and

in a case where the configuration information is configured to determine the fifth retransmission number in cooperation with the first information, a corresponding relationship is defined between the first information and the fifth retransmission number among the at least one of the numbers of retransmissions.

10. The method as claimed in claim 8, wherein the configuration information comprises at least one of numbers of the retransmissions of the PUSCH;

in a case where the configuration information is configured to determine the second retransmission number by configuring the second information, a corresponding relationship is defined between the second information and the second retransmission number among the at least one of the numbers of retransmissions;

in a case where the configuration information is configured to determine the fourth retransmission number in cooperation with second information, a corresponding relationship is defined between the second information and the fourth retransmission number among the at least one of the numbers of retransmissions; and

in a case where the fifth retransmission number is configured to determine the sixth retransmission number, a corresponding relationship is defined between the fifth retransmission number and the sixth retransmission number.

11. The method as claimed in any one of claims 8-10, wherein the first retransmission number and the second retransmission number are the same or different; or the second retransmission number is less than the first retransmission number; and the third retransmission number and the fourth retransmission number are the same or different.

12. A terminal device, comprising a processor and a memory, wherein the memory is configured to store a computer program, and the processor is configured to call and run computer program stored in the memory, and to execute the method as claimed in any one of claims 1 to 7.

13. A network device, comprising a processor and a memory, wherein the memory is configured to store computer programs, and the processor is configured to call and run computer programs stored in the memory, and to execute the method as claimed in any one of claims 8-11.

**Patentansprüche**

1. Drahtloskommunikationsverfahren, **dadurch gekennzeichnet, dass** es folgende Vorgänge umfasst:

Erhalten (S1110, S1210), durch ein Endgerät, von Auslegungsinformationen über "Random Access"-Ressourcen;

Bestimmen (S920), durch das Endgerät, einer ersten Wiederübertragungsanzahl gemäß den Auslegungsinformationen und ersten Informationen; und

Bestimmen (S930), durch das Endgerät, einer zweiten Wiederübertragungsanzahl gemäß dem Auslegungsinformationen und zweiten Informationen; wobei die erste Wiederübertragungsanzahl eine Anzahl von Wiederübertragungen des "Physical Random Access Channel", PRACH, ist; die zweite Wiederübertragungsanzahl eine Anzahl von Wiederübertragungen des "Physical Uplink Shared Channel", PUSCH, ist; und der PRACH und der PUSCH in einer Nachricht "Msg A" eines zweistufigen "Random Access" getragen werden; oder

Bestimmen (S1120), durch das Endgerät, einer dritten Wiederübertragungsanzahl gemäß den Auslegungsinformationen und ersten Informationen; und

Bestimmen (S1130), durch das Endgerät, einer vierten Wiederübertragungsanzahl gemäß den Auslegungsinformationen und zweiten Informationen; wobei die dritte Wiederübertragungsanzahl eine Anzahl von Wiederübertragungen des PRACH von konkurrenzbasiertem vierstufigem "Random Access" ist, und die vierte Wiederübertragungsanzahl eine Anzahl von Wiederübertragungen des PUSCH des konkurrenzbasierten vierstufigen "Random Access" ist; oder

Bestimmen (S1220), durch das Endgerät, einer fünften Wiederübertragungsanzahl gemäß den Auslegungsinformationen und ersten Informationen; und

Bestimmen (S1230), durch das Endgerät, einer sechsten Wiederübertragungsanzahl gemäß der fünften Wiederübertragungsanzahl; wobei die fünfte Wiederübertragungsanzahl eine Anzahl von Wiederübertragungen des PRACH ist, die sechste Wiederübertragungsanzahl eine Anzahl von Wiederübertragungen des PUSCH ist, und der PRACH und der PUSCH in der "Msg A" des zweistufigen "Random Access" getragen werden; oder die fünfte Wiederübertragungsanzahl eine Anzahl von Wiederübertragungen des PRACH von konkurrenzbasiertem vierstufigem "Random Access" ist, und die sechste Wiederübertragungsanzahl eine Anzahl von Wiederübertragungen des PUSCH des konkurrenzbasierten vierstufigen "Random Access" ist;

wobei die ersten Informationen mindestens eines von einer Art, einer Fähigkeit und einem "Reference Signal Receiving Power"-, RSRP-, Messungsergebnis des Endgeräts umfassen; die zweiten Informationen mindestens eines von der Art, der Fähigkeit und dem RSRP-Messergebnis des Endgeräts umfassen; und das RSRP-Messergebnis ein RSRP-Messergebnis ist, das durch das Endgerät erhalten wird, das RSRP-Messung an einem "Synchronization Signal Block", SSB, durchführt.

2. Verfahren nach Anspruch 1, wobei die Auslegungsinformationen mindestens eine von Anzahlen der Wiederübertragungen des PRACH umfasst; und

in einem Fall, in dem das Verfahren das Bestimmen (S920), durch das Endgerät, einer ersten Wiederübertragungsanzahl gemäß den Auslegungsinformationen und ersten Informationen umfasst, eine Entsprechungsbeziehung zwischen den ersten Informationen und der ersten Wiederübertragungsanzahl unter der mindestens einen der Anzahlen von Wiederübertragungen definiert wird; und

in einem Fall, in dem das Verfahren das Bestimmen (S1120), durch das Endgerät, einer dritten Wiederübertragungsanzahl gemäß den Auslegungsinformationen und ersten Informationen umfasst, eine Entsprechungsbeziehung zwischen den ersten Informationen und der dritten Wiederübertragungsanzahl unter der mindestens einen der Anzahlen von Wiederübertragungen definiert wird; und

in einem Fall, in dem das Verfahren das Bestimmen (S1220), durch das Endgerät, einer fünften Wiederübertragungsanzahl gemäß den Auslegungsinformationen und ersten Informationen umfasst, eine Entsprechungsbeziehung zwischen den ersten Informationen und der fünften Wiederübertragungsanzahl unter der mindestens einen der Anzahlen von Wiederübertragungen definiert wird.

3. Verfahren nach Anspruch 1, wobei die Auslegungsinformationen mindestens eine von Anzahlen der Wiederübertragungen des PUSCH umfasst; und

in einem Fall, in dem das Verfahren das Bestimmen (S930), durch das Endgerät, einer zweiten Wiederübertragungsanzahl gemäß den Auslegungsinformationen und zweiten Informationen umfasst, eine Entsprechungsbeziehung zwischen den zweiten Informationen und der zweiten Wiederübertragungsanzahl unter der mindestens einen der Anzahlen von Wiederübertragungen definiert wird;

in einem Fall, in dem das Verfahren das Bestimmen, durch das Endgerät (S1130), einer vierten Wiederübertragungsanzahl gemäß den Auslegungsinformationen und zweiten Informationen umfasst, eine Entsprechungsbeziehung zwischen den zweiten Informationen und der vierten Wiederübertragungsanzahl unter der mindestens einen der Anzahlen der Wiederübertragungen des PUSCH definiert wird;

in einem Fall, in dem das Verfahren das Bestimmen (S1230), durch das Endgerät, einer sechsten Wiederübertragungsanzahl gemäß der fünften Wiederübertragungsanzahl umfasst, eine Entsprechungsbeziehung zwischen der fünften Wiederübertragungsanzahl und der sechsten Wiederübertragungsanzahl definiert wird.

4. Verfahren nach einem der Ansprüche 1 bis 3, wobei die erste Wiederübertragungsanzahl und die zweite Wiederübertragungsanzahl gleich oder verschieden sind; oder die zweite Wiederübertragungsanzahl kleiner ist als die erste Wiederübertragungsanzahl; und die dritte Wiederübertragungsanzahl und die vierte Wiederübertragungsanzahl gleich oder verschieden sind.

5. Verfahren nach einem der Ansprüche 1 bis 4, wobei die erste Wiederübertragungsanzahl M ist, die zweite Wiederübertragungsanzahl N ist und sowohl N als auch M positive ganze Zahlen sind; und eine Entsprechungsbeziehung zwischen der N-Anzahl von PRACHs und der M-Anzahl von PUSCHs definiert wird.

6. Verfahren nach Anspruch 5, ferner umfassend:

Empfangen, durch das Endgerät, von Anweisungsinformationen, die dafür ausgelegt sind, die Entsprechungsbeziehung zwischen der N-Anzahl von PRACHs und der M-Anzahl von PUSCHs anzugeben; wobei die Entsprechungsbeziehung zwischen der N-Anzahl von PRACHs und der M-Anzahl von PUSCHs vordefiniert ist.

7. Verfahren nach Anspruch 3, wobei die Entsprechungsbeziehung zwischen der fünften Wiederübertragungsanzahl und der sechsten Wiederübertragungsanzahl von einer Netzvorrichtung ausgelegt oder vordefiniert wird.

8. Drahtloskommunikationsverfahren, umfassend:

Senden (S910), durch eine Netzvorrichtung, von Auslegungsinformationen über "Random Access"-Ressourcen an ein Endgerät;

**dadurch gekennzeichnet, dass** die Auslegungsinformationen dafür ausgelegt sind, im Zusammenwirken mit ersten Informationen eine erste Wiederübertragungsanzahl zu bestimmen, und dafür ausgelegt sind, durch Auslegen von zweiten Informationen eine zweite Wiederübertragungsanzahl zu bestimmen; und die erste Wiederübertragungsanzahl eine Wiederübertragungsanzahl des "Physical Random Access Channel", PRACH, ist; die zweite Wiederübertragungsanzahl eine Wiederübertragungsanzahl des "Physical Uplink Shared Channel", PUSCH, ist; und der PRACH und der PUSCH in einer Nachricht "Msg A" von zweistufigem "Random Access" getragen werden; oder

**dadurch gekennzeichnet, dass** die Auslegungsinformationen dafür ausgelegt sind, eine dritte Wiederübertragungsanzahl durch Auslegen von ersten Informationen zu bestimmen, und dafür ausgelegt sind, die vierte Wiederübertragungsanzahl im Zusammenwirken mit zweiten Informationen zu bestimmen; und die dritte Wiederübertragungsanzahl eine Anzahl von Wiederübertragungen des PRACH von konkurrenzbasiertem vierstufigem "Random Access" ist; die vierte Wiederübertragungsanzahl eine Anzahl von Wiederübertragungen des PUSCH des konkurrenzbasierten vierstufigen "Random Access" ist; oder

**dadurch gekennzeichnet, dass** die Auslegungsinformationen dafür ausgelegt sind, im Zusammenwirken mit ersten Informationen eine fünfte Wiederübertragungsanzahl zu bestimmen; und die fünfte Wiederübertragungsanzahl dafür ausgelegt ist, die sechste Wiederübertragungsanzahl zu bestimmen; und die fünfte Wiederübertragungsanzahl eine Anzahl von Wiederübertragungen des "Physical Random Access Channel", PRACH, ist; die sechste Wiederübertragungsanzahl eine Anzahl von Wiederübertragungen des "Physical Uplink Shared Channel", PUSCH, ist; der PRACH und der PUSCH in einer "Msg A" von zweistufigem "Random Access" getragen werden;

oder die fünfte Wiederübertragungsanzahl eine Anzahl von Wiederübertragungen des PRACH von konkurrenzbasiertem vierstufigem "Random Access" ist; und die sechste Wiederübertragungsanzahl eine Anzahl von Wiederübertragungen des PUSCH des konkurrenzbasierten vierstufigen "Random Access" ist;

wobei die ersten Informationen mindestens eines von einer Art, einer Fähigkeit und einem "Reference Signal Receiving Power"-, RSRP-, Messungsergebnis des Endgeräts umfassen; die zweiten Informationen mindestens eines von der Art, der Fähigkeit und dem RSRP-Messergebnis des Endgeräts umfassen; und das RSRP-Messergebnis ein RSRP-Messergebnis ist, das durch das Endgerät erhalten wird, das RSRP-Messung an einem "Synchronization Signal Block", SSB, durchführt.

9. Verfahren nach Anspruch 8, wobei die Auslegungsinformationen mindestens eine von Anzahlen der Wiederübertragungen des PRACH umfasst;

in einem Fall, in dem die Auslegungsinformationen dafür ausgelegt sind, die erste Wiederübertragungsanzahl im Zusammenwirken mit den ersten Information zu bestimmen, eine Entsprechungsbeziehung zwischen den ersten Informationen und der ersten Wiederholungsanzahl unter der mindestens einen der Anzahlen von Wiederübertragungen definiert wird;

in einem Fall, in dem die Auslegungsinformationen dafür ausgelegt sind, die dritte Wiederübertragungsanzahl durch Auslegen der ersten Informationen zu bestimmen, eine Entsprechungsbeziehung zwischen den ersten Informationen und der dritten Wiederübertragungsanzahl unter der mindestens einen der Anzahlen von Wiederübertragungen definiert wird; und

in einem Fall, in dem die Auslegungsinformationen dafür ausgelegt sind, die fünfte Wiederübertragungsanzahl im Zusammenwirken mit den ersten Information zu bestimmen, eine Entsprechungsbeziehung zwischen den ersten Informationen und der fünften Wiederübertragungsanzahl unter der mindestens einen der Anzahlen von Wiederübertragungen definiert wird.

10. Verfahren nach Anspruch 8, wobei die Auslegungsinformationen mindestens eine von Anzahlen der Wiederübertragungen des PUSCH umfasst;

in einem Fall, in dem die Auslegungsinformationen dafür ausgelegt sind, die zweite Wiederübertragungsanzahl durch Auslegen der zweiten Informationen zu bestimmen, eine Entsprechungsbeziehung zwischen den zweiten Informationen und der zweiten Wiederübertragungsanzahl unter der mindestens einen der Anzahlen von Wiederübertragungen definiert wird;

in einem Fall, in dem die Auslegungsinformationen dafür ausgelegt sind, die vierte Wiederübertragungsanzahl im Zusammenwirken mit zweiten Information zu bestimmen, eine Entsprechungsbeziehung zwischen den zweiten Informationen und der vierten Wiederholungsanzahl unter der mindestens einen der Anzahlen von Wiederübertragungen definiert wird; und

in einem Fall, in dem die fünfte Wiederübertragungsanzahl dafür ausgelegt ist, die sechste Wiederübertragungsanzahl zu bestimmen, eine Entsprechungsbeziehung zwischen der fünften Wiederübertragungsanzahl und der sechsten Wiederübertragungsanzahl definiert wird.

11. Verfahren nach einem der Ansprüche 8 bis 10, wobei die erste Wiederübertragungsanzahl und die zweite Wiederübertragungsanzahl gleich oder verschieden sind; oder die zweite Wiederübertragungsanzahl kleiner ist als die erste Wiederübertragungsanzahl; und die dritte Wiederübertragungsanzahl und die vierte Wiederübertragungsanzahl gleich oder verschieden sind.

12. Endgerät, umfassend einen Prozessor und einen Speicher, wobei der Speicher dafür ausgelegt ist, ein Computerprogramm zu speichern, und der Prozessor dafür ausgelegt ist, das im Speicher gespeicherte Computerprogramm aufzurufen und auszuführen und das Verfahren nach einem der Ansprüche 1 bis 7 durchzuführen.

13. Netzvorrichtung, umfassend einen Prozessor und einen Speicher, wobei der Speicher dafür ausgelegt ist, Computerprogramme zu speichern, und der Prozessor dafür ausgelegt ist, im Speicher gespeicherte Computerprogramme aufzurufen und auszuführen und das Verfahren nach einem der Ansprüche 8 bis 11 durchzuführen.

**Revendications**

1. Procédé de communication sans fil, **caractérisé en ce qu'**il comprend :

l'obtention (S1110, S1210), par un dispositif terminal, d'informations de configuration de ressources d'accès aléatoire ;
la détermination (S920), par le dispositif terminal, d'un premier nombre de retransmissions en fonction des informations de configuration et de premières informations ; et la détermination (S930), par le dispositif terminal, d'un deuxième nombre de retransmissions en fonction des informations de configuration et de secondes informations ; dans lequel le premier nombre de retransmissions est un nombre de retransmissions de canal d'accès aléatoire physique, PRACH ; le deuxième nombre de retransmissions est un nombre de retransmissions de canal partagé de liaison montante physique, PUSCH ; et le PRACH et le PUSCH sont acheminés dans un message Msg A d'accès aléatoire en deux étapes ; ou
la détermination (S1120), par le dispositif terminal, d'un troisième nombre de retransmissions en fonction des informations de configuration et de premières informations ; et la détermination (S1130), par le dispositif terminal, d'un quatrième nombre de retransmissions en fonction des informations de configuration et de secondes informations ; dans lequel le troisième nombre de retransmissions est un nombre de retransmissions de PRACH d'accès aléatoire en quatre étapes basé sur la contention, et le quatrième nombre de retransmissions est un nombre de retransmissions de PUSCH de l'accès aléatoire en quatre étapes basé sur la contention ; ou
la détermination (S1220), par le dispositif terminal, d'un cinquième nombre de retransmissions en fonction des informations de configuration et de premières informations ; et la détermination (S1230), par le dispositif terminal, d'un sixième nombre de retransmissions en fonction du cinquième nombre de retransmissions ; dans lequel le cinquième nombre de retransmissions est un nombre de retransmissions de PRACH, le sixième nombre de retransmissions est un nombre de retransmissions de PUSCH, et le PRACH et le PUSCH sont acheminés dans le Msg A de l'accès aléatoire en deux étapes ; ou le cinquième nombre de retransmissions est un nombre de retransmissions de PRACH d'accès aléatoire en quatre étapes basé sur la contention, et le sixième nombre de retransmissions est un nombre de retransmissions du PUSCH de l'accès aléatoire en quatre étapes basé sur la contention ;
dans lequel les premières informations comprennent au moins l'un d'un type, d'une capacité et d'un résultat de mesure de puissance de réception de signal de référence, RSRP, du dispositif terminal ; les secondes informations comprennent au moins l'un du type, de la capacité et du résultat de mesure de RSRP du dispositif terminal ; et le résultat de mesure de RSRP est un résultat de mesure de RSRP obtenu par la réalisation par le dispositif terminal d'une mesure de RSRP sur un bloc de signaux de synchronisation, SSB.

2. Procédé selon la revendication 1, dans lequel les informations de configuration comprennent au moins l'un de nombres des retransmissions du PRACH ; et

dans un cas où le procédé comprend la détermination (S920), par le dispositif terminal, d'un premier nombre de retransmissions en fonction des informations de configuration et de premières informations, une relation correspondante est définie entre les premières informations et le premier nombre de retransmissions parmi l'au moins un des nombres de retransmissions ; et

dans un cas où le procédé comprend la détermination (S1120), par le dispositif terminal, d'un troisième nombre de retransmissions en fonction des informations de configuration et de premières informations, une relation correspondante est définie entre les premières informations et le troisième nombre de retransmissions parmi l'au moins un des nombres de retransmissions ; et

dans un cas où le procédé comprend la détermination (S1220), par le dispositif terminal, d'un cinquième nombre de retransmissions en fonction des informations de configuration et de premières informations, une relation correspondante est définie entre les premières informations et le cinquième nombre de retransmissions parmi l'au moins un des nombres de retransmissions.

3. Procédé selon la revendication 1, dans lequel les informations de configuration comprennent au moins l'un de nombres de retransmissions du PUSCH ; et

dans un cas où le procédé comprend la détermination (S930), par le dispositif terminal, d'un deuxième nombre de retransmissions en fonction des informations de configuration et de secondes informations, une relation correspondante est définie entre les secondes informations et le deuxième nombre de retransmissions parmi l'au moins un des nombres de retransmissions ;

dans un cas où le procédé comprend la détermination, par le dispositif terminal (S1130), d'un quatrième nombre de retransmissions en fonction des informations de configuration et de secondes informations, une relation correspondante est définie entre les secondes informations et le quatrième nombre de retransmissions parmi l'au moins un des nombres de retransmissions du PUSCH ;

dans un cas où le procédé comprend la détermination (S1230), par le dispositif terminal, d'un sixième nombre de retransmissions en fonction du cinquième nombre de retransmissions, une relation correspondante est définie entre le cinquième nombre de retransmissions et le sixième nombre de retransmissions.

4. Procédé selon l'une quelconque des revendications 1 à 3, dans lequel le premier nombre de retransmissions et le deuxième nombre de retransmissions sont identiques ou différents ; ou le deuxième nombre de retransmissions est inférieur au premier nombre de retransmissions ; et le troisième nombre de retransmissions et le quatrième nombre de retransmissions sont identiques ou différents.

5. Procédé selon l'une quelconque des revendications 1 à 4, dans lequel le premier nombre de retransmissions est M, le deuxième nombre de retransmissions est N, et N et M sont tous deux des entiers positifs ; et une relation correspondante est définie entre un nombre N de PRACH et un nombre M de PUSCH.

6. Procédé selon la revendication 5, comprenant en outre :

la réception, par le dispositif terminal, d'informations d'instruction configurées pour indiquer la relation correspondante entre le nombre N de PRACH et le nombre M de PUSCH ;
dans lequel la relation correspondante entre le nombre N de PRACH et le nombre M de PUSCH est prédéfinie.

7. Procédé selon la revendication 3, dans lequel la relation correspondante entre le cinquième nombre de retransmissions et le sixième nombre de retransmissions est configurée ou prédéfinie par un dispositif de réseau.

8. Procédé de communication sans fil, comprenant :

l'envoi (S910), par un dispositif de réseau, d'informations de configuration de ressources d'accès aléatoire à un dispositif terminal ;
**caractérisé en ce que** les informations de configuration sont configurées pour déterminer un premier nombre de retransmissions en coopération avec des premières informations, et sont configurées pour déterminer un deuxième nombre de retransmissions en configurant des secondes informations ; et le premier nombre de retransmissions est un nombre de retransmissions de canal d'accès aléatoire physique, PRACH ; le deuxième nombre de retransmissions est un nombre de retransmissions de canal partagé de liaison montante physique, PUSCH ; et le PRACH et le PUSCH sont acheminés dans un message Msg A d'accès aléatoire en deux étapes ; ou
**caractérisé en ce que** les informations de configuration sont configurées pour déterminer un troisième nombre de retransmissions en configurant des premières informations, et sont configurées pour déterminer le quatrième nombre de retransmissions en coopération avec des secondes informations ; et le troisième nombre de retransmissions est un nombre de retransmissions de PRACH d'accès aléatoire en quatre étapes basé sur la contention ; le quatrième nombre de retransmissions est un nombre de retransmissions de PUSCH de l'accès aléatoire en quatre étapes basé sur la contention ; ou

**caractérisé en ce que** les informations de configuration sont configurées pour déterminer un cinquième nombre de retransmissions en coopération avec des premières informations ; et le cinquième nombre de retransmissions est configuré pour déterminer le sixième nombre de retransmissions ; et le cinquième nombre de retransmissions est un nombre de retransmissions de canal d'accès aléatoire physique, PRACH ; le sixième nombre de retransmissions est un nombre de retransmissions de canal partagé de liaison montante physique, PUSCH ; le PRACH et le PUSCH sont acheminés dans un Msg A d'accès aléatoire en deux étapes ; ou le cinquième nombre de retransmissions est un nombre de retransmissions de PRACH d'accès aléatoire en quatre étapes basé sur la contention ; et le sixième nombre de retransmissions est un nombre de retransmissions de PUSCH de l'accès aléatoire en quatre étapes basé sur la contention ;

dans lequel les premières informations comprennent au moins l'un d'un type, d'une capacité et d'un résultat de mesure de puissance de réception de signal de référence, RSRP, du dispositif terminal ; les secondes informations comprennent au moins l'un du type, de la capacité et du résultat de mesure de RSRP du dispositif terminal ; et le résultat de mesure de RSRP est un résultat de mesure de RSRP obtenu par la réalisation par le dispositif terminal d'une mesure de RSRP sur un bloc de signaux de synchronisation, SSB.

9. Procédé selon la revendication 8, dans lequel les informations de configuration comprennent au moins l'un de nombres des retransmissions du PRACH ;

dans un cas où les informations de configuration sont configurées pour déterminer le premier nombre de retransmissions en coopération avec les premières informations, une relation correspondante est définie entre les premières informations et le premier nombre de retransmissions parmi l'au moins un des nombres de retransmissions ;

dans un cas où les informations de configuration sont configurées pour déterminer le troisième nombre de retransmissions en configurant les premières informations, une relation correspondante est définie entre les premières informations et le troisième nombre de retransmissions parmi l'au moins un des nombres de retransmissions; et

dans un cas où les informations de configuration sont configurées pour déterminer le cinquième nombre de retransmissions en coopération avec les premières informations, une relation correspondante est définie entre les premières informations et le cinquième nombre de retransmissions parmi l'au moins un des nombres de retransmissions.

10. Procédé selon la revendication 8, dans lequel les informations de configuration comprennent au moins l'un de nombres des retransmissions du PUSCH ;

dans un cas où les informations de configuration sont configurées pour déterminer le deuxième nombre de retransmissions en configurant les secondes informations, une relation correspondante est définie entre les secondes informations et le deuxième nombre de retransmissions parmi l'au moins un des nombres de retransmissions ;

dans un cas où les informations de configuration sont configurées pour déterminer le quatrième nombre de retransmissions en coopération avec des secondes informations, une relation correspondante est définie entre les secondes informations et le quatrième nombre de retransmissions parmi l'au moins un des nombres de retransmissions ; et

dans un cas où le cinquième nombre de retransmissions est configuré pour déterminer le sixième nombre de retransmissions, une relation correspondante est définie entre le cinquième nombre de retransmissions et le sixième nombre de retransmissions.

11. Procédé selon l'une quelconque des revendications 8 à 10, dans lequel le premier nombre de retransmissions et le deuxième nombre de retransmissions sont identiques ou différents ; ou le deuxième nombre de retransmissions est inférieur au premier nombre de retransmissions ; et le troisième nombre de retransmissions et le quatrième nombre de retransmissions sont identiques ou différents.

12. Dispositif terminal, comprenant un processeur et une mémoire, dans lequel la mémoire est configurée pour stocker un programme informatique, et le processeur est configuré pour appeler et exécuter un programme informatique stocké dans la mémoire, et pour exécuter le procédé selon l'une quelconque des revendications 1 à 7.

13. Dispositif de réseau, comprenant un processeur et une mémoire, dans lequel la mémoire est configurée pour stocker des programmes informatiques, et le processeur est configuré pour appeler et exécuter des programmes informatiques stockés dans la mémoire, et pour exécuter le procédé selon l'une quelconque des revendications 8 à 11.

**100**

FIG. 1

FIG. 2

FIG. 3

FIG. 4

FIG. 5

FIG. 6

| PO time slot | | | | | | | | | | | | | | PO time slot | | | | | | | | | | | | | |
|---|---|---|---|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

PO#3　PO#7　PO#11　PO#3　PO#7　PO#11

PO#2　PO#6　PO#10　PO#2　PO#6　PO#10

PO#1　PO#5　PO#9　PO#1　PO#5　PO#9

PO#0　PO#4　PO#8　PO#0　PO#4　PO#8

frequency domain starting position of PO

frequency domain starting position of BWP

FIG. 7

31

| PO #3 |
|---|
| DMRS #3 {port 1, sequence 1} |
| DMRS #2 {port 0, sequence 1} |
| DMRS #1 {port 1, sequence 0} |
| DMRS #0 {port 0, sequence 0} |

| PO #2 |
|---|
| DMRS #3 {port 1, sequence 1} |
| DMRS #2 {port 0, sequence 1} |
| DMRS #1 {port 1, sequence 0} |
| DMRS #0 {port 0, sequence 0} |

| SSB #0，RO #0 |
|---|
| preambles 46-47 |
| preambles 44-45 |
| preambles 42-43 |
| preambles 40-41 |
| preambles 38-39 |
| preambles 36-37 |
| preambles 34-35 |
| preambles 32-33 |

| PO #1 |
|---|
| DMRS #3 {port 1, sequence 1} |
| DMRS #2 {port 0, sequence 1} |
| DMRS #1 {port 1, sequence 0} |
| DMRS #0 {port 0, sequence 0} |

| PO #0 |
|---|
| DMRS #3 {port 1, sequence 1} |
| DMRS #2 {port 0, sequence 1} |
| DMRS #1 {port 1, sequence 0} |
| DMRS #0 {port 0, sequence 0} |

FIG. 8

| terminal device | | network device |

S910: sends configuration information of random access resources

S920: determines a first retransmission number according to the configuration information and first information

S930: determines a second retransmission number according to the configuration information and second information

FIG. 9

| first transmission of PRACH | first transmission of PUSCH | second transmission of PRACH | third transmission of PRACH | second transmission of PUSCH | fourth transmission of PRACH |

| first transmission of Msg A | second transmission of Msg A | third transmission of Msg A | fourth transmission of Msg A |

FIG. 10

```
   ┌─────────────────┐                              ┌─────────────────┐
   │ terminal device │                              │ network device  │
   └─────────────────┘                              └─────────────────┘

              S1110 : sends configuration information of random access
           resources
```

S1120: determines a third retransmission number according to the configuration information and first information

S1130: determines a fourth retransmission number according to the configuration information and second information

FIG. 11

```
   ┌─────────────────┐                              ┌─────────────────┐
   │ terminal device │                              │ network device  │
   └─────────────────┘                              └─────────────────┘

              S1210 : sends configuration information of random access
           resources
```

S1220: determines a fifth retransmission number according to the configuration information and first information

S1230: determines a sixth retransmission number according to the fifth number of retransmissions

FIG. 12

terminal device 1300

communication unit 1310

processing unit 1320

FIG. 13

terminal device 1400

communication unit 1410

processing unit 1420

FIG. 14

terminal device 1500

communication unit 1510

processing unit 1520

FIG. 15

network device 1600

communication unit 1610

FIG. 16

network device 1700

communication unit 1710

FIG. 17

network device 1800

communication unit 1810

FIG. 18

communication device
1900

memory
1920

processor
1910

transceiver
1930

FIG. 19

apparatus 2000

input
interface
2030

processor
2010

memory
2020

output
interface
2040

FIG. 20

communication system
2100

2110

2120

terminal device

network device

FIG. 21

**EP 4 243 548 B1**

## REFERENCES CITED IN THE DESCRIPTION

**Patent documents cited in the description**

- WO 2020194758 A1